# EUROPEAN PATENT APPLICATION

(11) **EP 4 730 827 A1**
(43) Date of publication of application: **22.04.2026**
(21) Application number: 24899399.0
(22) Date of filing: 14.09.2024
(51) Int. Cl.: H04N 23/55

(54) **CAMERA MODULE AND ELECTRONIC DEVICE**

(30) Priority: 08.12.2023 CN 202311693285; 29.01.2024 CN 202410124692
(71) Applicant: Huawei Technologies Co., Ltd., Shenzhen, Guangdong 518129 (CN)
(72) Inventor: LIU, Bin, Shenzhen, Guangdong 518129 (CN); LI, Dengfeng, Shenzhen, Guangdong 518129 (CN); LIU, Hongming, Shenzhen, Guangdong 518129 (CN); TANG, Wei, Shenzhen, Guangdong 518129 (CN)
(74) Representative: Pfenning, Meinig & Partner mbB
(86) International application number: PCT/CN2024/119069
(87) International publication number: WO 2025/118753

(57) **Abstract**

This application provides a camera module and an electronic device. One or two collision surfaces of a pair of opposite collision surfaces of two mechanical parts that can move toward each other in the camera module may be coated with a dustproof material. The dustproof material may be one or more of an oil-based material, a lipid-based material, or a soft rubber-like material, and the dustproof material may have specific adhesion. In a process in which the two collision surfaces collide with each other, some mechanical energy can be converted into internal energy by the dustproof material. In addition, debris, particles, dust, and the like generated due to a collision in the camera module may be adhered to the dustproof material. The debris, particles, dust, and the like have less impact on propagation of imaging light of the camera module, and imaging quality of the camera module and the electronic device can be improved to some extent.

## Description

This application claims priority to Chinese Patent Application No. 202311693285.7, filed with the China National Intellectual Property Administration on December 8, 2023 and entitled "CAMERA MODULE AND ELECTRONIC DEVICE", which is incorporated herein by reference in its entirety.

This application claims priority to Chinese Patent Application No. 202410124692.4, filed with the China National Intellectual Property Administration on January 29, 2024 and entitled "CAMERA MODULE AND ELECTRONIC DEVICE", which is incorporated herein by reference in its entirety.

### TECHNICAL FIELD

This application relates to the field of terminal device hardware, and specifically, to a camera module and an electronic device.

### BACKGROUND

A camera module with a focus adjustment function, a focusing function, or an image stabilization function may generally drive, by using a drive component, a lens element, a sensor, or the like in the module to move, to implement a corresponding function. In a movement process, the drive component collides with another component in a lens module. Similarly, in a falling process of an electronic device including a lens module, a collision may also occur between mechanical parts inside the lens module. Different structures may generate debris in a collision or friction process. If the debris blocks propagation of incident light (for example, falls on an optical device like an imaging sensor or a filter), a problem that affects imaging quality, for example, a black spot, is caused.

How to reduce an adverse impact of debris generated by a collision between different components in a lens module on imaging quality is a problem worth considering.

### SUMMARY

This application provides a camera module and an electronic device. Collision surfaces of two mechanical parts that may collide with each other in the camera module may be coated with a dustproof material, and the dustproof material may be one or more of an oil-based material, a lipid-based material, or a soft rubber-like material, so that a probability of generating dust due to a collision between the mechanical parts is lower. Particles, dust, and debris generated due to a collision in the camera module can be adhered to the dustproof material to some extent, so that imaging quality of the camera module is higher.

According to a first aspect, a camera module is provided, including: a lens element, a movable part, a fastening member, and a photosensitive component. The movable part includes a first collision surface; the fastening member includes a second collision surface; and the movable part is configured to be capable of approaching the fastening member in a target direction. The first collision surface and the second collision surface are two surfaces with a smallest spacing between the movable part and the fastening member in the target direction, the first collision surface and/or the second collision surface are coated with a dustproof material, and the dustproof material includes one or more of the following: an oil-based material, a lipid-based material, or a soft rubber-like material.

In a possible implementation, the movable part may approach the fastening member based on a preset trajectory, or the movable part may approach the fastening member due to a reason like extrusion or a collision of the camera module.

In this technical solution, one or two of a pair of collision surfaces disposed opposite to each other in the camera module can be coated with the dustproof material. The oil-based material, the lipid-based material, or the soft rubber-like material can convert mechanical energy in the collision into internal energy to some extent, and can reduce a probability of dust generation caused by the collision between mechanical parts to some extent. Implementation of the technical solution helps reduce adverse impact of debris caused by the collision in the camera module on imaging light, and can improve imaging quality of the camera module to some extent.

With reference to the first aspect, in some implementations of the first aspect, an energy storage modulus E of the dustproof material at 25°C satisfies: E≤50 kPa.

The dustproof material may be a material in a liquid state at a normal temperature. The dustproof material in a liquid state is easy to be coated on the collision surface of the camera module, which helps simplify a processing and production process of the camera module. In an actual manufacturing and production process, the dustproof material in a liquid state may be sprayed at a plurality of points on different regions of the collision surface based on an area of the collision surface, and then the dustproof material with fluidity is made to flow and cover the collision surface through vibration.

With reference to the first aspect, in some implementations of the first aspect, a viscosity η of the dustproof material at 25°C satisfies: η≥5000 mPa·s.

The dustproof material has specific adhesion, so that the debris, dust, or the like in the camera module can be adhered to the dustproof material. Implementation of the technical solution helps further reduce the adverse impact of the debris caused by the collision in the camera module on the imaging light.

With reference to the first aspect, in some implementations of the first aspect, a mass evaporation loss α of the dustproof material at 200°C for 24 hours satisfies: α≤0.25%.

The dustproof material may have a specific high-temperature resistance characteristic or thermal stability. Implementation of the technical solution helps improve image stabilization performance, focus adjustment and focusing performance, and imaging quality stability in a use process of the camera module.

With reference to the first aspect, in some implementations of the first aspect, the target direction is an axial direction of the lens element, and the first collision surface and the second collision surface are perpendicular to the axial direction of the lens element.

In some scenarios, the foregoing technical solution may also be understood as that the first collision surface and the second collision surface may be a group of collision surfaces on which a collision is caused by an autofocus function or a focus adjustment function of the camera module.

Focusing and focus adjustment are common shooting scenarios of the camera module. This technical solution improves a common transmission structure of the camera module. This helps improve pertinence and effectiveness of applying the dustproof material to the camera module, and helps improve reliability of an image shooting function and stability of imaging quality of the camera module in these scenarios.

With reference to the first aspect, in some implementations of the first aspect, the target direction is perpendicular to an axial direction of the lens element, and the first collision surface and the second collision surface are parallel to the axial direction of the lens element.

In some scenarios, the foregoing technical solution may also be understood as that the first collision surface and the second collision surface may be a group of collision surfaces on which a collision is caused by an image stabilization function of the camera module. The image stabilization function may be implemented by driving the lens element to move, that is, lens element image stabilization, or may be implemented by driving the photosensitive component to move, that is, sensor image stabilization.

Image stabilization is a common shooting scenario of the camera module. This technical solution improves a common transmission structure of the camera module. This helps improve pertinence and effectiveness of applying the dustproof material to the camera module, and helps improve reliability of an image shooting function and stability of imaging quality of the camera module in these scenarios.

With reference to the first aspect, in some implementations of the first aspect, the movable part is sleeved on a periphery of the lens element, there are a plurality of first collision surfaces, and the plurality of first collision surfaces are located on two end faces that are of the movable part and that are disposed opposite to each other in the target direction.

In some scenarios, the movable part may also be referred to as a lens element holder.

The first collision surfaces located on the two end faces that are of the movable part and that are disposed opposite to each other in the target direction may respectively correspond to functions of focus adjustment or focusing of the camera module in opposite directions. The collision surfaces at the two ends of the movable part are coated with the dustproof material. Implementation of this technical solution helps further reduce a probability of dust generation caused by a collision of mechanical parts in a focus adjustment or focusing process of the camera module, and improve imaging quality.

With reference to the first aspect, in some implementations of the first aspect, the movable part is sleeved on a periphery of the lens element, the movable part includes a main structure located in a middle region and a plurality of first stop structures, the main structure is configured to fasten the lens element, the plurality of first stop structures are distributed on two side surfaces that are of the main structure and that are disposed opposite to each other in the target direction, and the first collision surface is located on a surface that is of the first stop structure and that is close to the second collision surface.

In some scenarios, the movable part may also be referred to as a lens element holder.

The first collision surfaces located on the two side surfaces that are of the movable part and that are disposed opposite to each other in the target direction may respectively correspond to functions of image stabilization of the camera module in opposite directions. The collision surfaces at the two sides of the movable part are coated with the dustproof material. Implementation of this technical solution helps further reduce a probability of dust generation caused by a collision of mechanical parts in an image stabilization process of the camera module, and improve imaging quality.

With reference to the first aspect, in some implementations of the first aspect, the fastening member is sleeved on an outer side of the movable part, the fastening member includes a second stop structure, and the second collision surface is located on a surface that is of the second stop structure and that is close to the first collision surface.

The second stop structure corresponding to the first stop structure may be disposed on the fastening member, and the first stop structure and the second stop structure may be provided with a material that is more suitable for friction and a collision, for example, a material with better wear resistance performance and better deformation performance. Implementation of this solution helps reduce a probability that debris and particles caused by a collision and wear between different mechanical parts in the camera module affect imaging quality.

With reference to the first aspect, in some implementations of the first aspect, the camera module further includes an accommodating member, the accommodating member is configured to accommodate the photosensitive component, and an end face of an end that is of the accommodating member and that is close to the lens element is coated with the dustproof material.

Coating, with the dustproof material, an outer side of the accommodating member that accommodates the photosensitive component helps reduce a probability that particles, dust, and debris in the camera module fall on the photosensitive component, and helps improve imaging quality of the camera module to some extent.

With reference to the first aspect, in some implementations of the first aspect, the movable part is sleeved on a periphery of the photosensitive component, the movable part includes a main structure located in a middle region and a plurality of first stop structures, the main structure is configured to fasten the sensor, the plurality of first stop structures are distributed on two side surfaces that are of the main structure and that are disposed opposite to each other in the target direction, and the first collision surface is located on a surface that is of the first stop structure and that is close to the second collision surface.

In this technical solution, the movable part is used to drive the photosensitive component to implement the image stabilization function.

The first collision surfaces located on the two side surfaces that are of the movable part and that are disposed opposite to each other in the target direction may respectively correspond to functions of image stabilization of the camera module in opposite directions. The collision surfaces at the two sides of the movable part are coated with the dustproof material. Implementation of this technical solution helps further reduce a probability of dust generation caused by a collision of mechanical parts in an image stabilization process of the camera module, and improve imaging quality.

With reference to the first aspect, in some implementations of the first aspect, the fastening member is sleeved on an outer side of the movable part, the fastening member includes a second stop structure, the second collision surface is located on a surface that is of the second stop structure and that is close to the first collision surface, and an end face of an end that is of the fastening member and that is close to the lens element is coated with the dustproof material.

The second stop structure corresponding to the first stop structure may be disposed on the fastening member, and the first stop structure and the second stop structure may be provided with a material that is more suitable for friction and a collision, for example, a material with better wear resistance performance and better deformation performance. Implementation of this solution helps reduce a probability that debris and particles caused by a collision and wear between different mechanical parts in the camera module affect imaging quality.

In addition, coating, with the dustproof material, an outer side of the fastening member helps reduce a probability that particles, dust, and debris in the camera module fall on the photosensitive component, and helps improve imaging quality of the camera module to some extent.

With reference to the first aspect, in some implementations of the first aspect, the movable part is sleeved on peripheries of the lens element and the photosensitive component, and the fastening member is sleeved on a periphery of the movable part.

In some scenarios, the fastening member may also be referred to as a pan-tilt-zoom fastening base.

For detailed descriptions and beneficial effect of the following technical solutions, refer to related content in the first aspect. For brevity, details are not described below.

According to a second aspect, a variable aperture assembly is provided, including: a blade, a blade holder, and a drive component. The drive component is sleeved on a periphery of the blade holder, and the blade is disposed on an end face of an end that is of the blade holder and that is away from the drive component. The blade holder includes a third collision surface. The drive component includes a fourth collision surface. The drive component is configured to be rotatable around a target rotation axis to approach the blade holder. The third collision surface and the fourth collision surface are two surfaces that approach each other in a rotation process of the drive component, the third collision surface and/or the fourth collision surface are/is coated with a dustproof material, and the dustproof material includes one or more of the following: an oil-based material, a lipid-based material, or a soft rubber-like material.

With reference to the second aspect, in some implementations of the second aspect, an energy storage modulus E of the dustproof material at 25°C satisfies: E≤50 kPa.

With reference to the second aspect, in some implementations of the second aspect, a viscosity η of the dustproof material at 25°C satisfies: η≥5000 mPa·s.

With reference to the second aspect, in some implementations of the second aspect, a mass evaporation loss α of the dustproof material at 200°C for 24 hours satisfies: α≤0.25%.

With reference to the second aspect, in some implementations of the second aspect, a groove is provided on an outer wall of the blade holder, a protrusion is disposed on an inner wall of the drive component, the protrusion extends into the groove, the third collision surface is located on the groove, and the fourth collision surface is located on the protrusion.

According to a third aspect, a camera module is provided, including a lens element, a photosensitive component, and the variable aperture assembly according to the second aspect and any possible implementation of the second aspect, where the variable aperture assembly is located on a surface that is of the lens element and that is away from the photosensitive component.

According to a fourth aspect, an electronic device is provided, including a middle frame and the camera module according to the first aspect and any possible implementation of the first aspect or the camera module according to the third aspect and any possible implementation of the third aspect. The camera module is fastened to the middle frame.

### BRIEF DESCRIPTION OF DRAWINGS

FIG. 1 is a diagram of an electronic device according to an embodiment of this application;
FIG. 2 is a diagram of a structure of a camera module according to an embodiment of this application;
FIG. 3 is a partially enlarged view of a region A1 in FIG. 2;
FIG. 4 is a diagram of a cross section of a camera module according to an embodiment of this application;
FIG. 5 is a diagram of a cross section of another camera module according to an embodiment of this application;
FIG. 6 is a diagram of a cross section of still another camera module according to an embodiment of this application;
FIG. 7 is a diagram of a structure of another camera module according to an embodiment of this application;
FIG. 8 is a diagram of a structure of still another camera module according to an embodiment of this application;
FIG. 9 is a diagram of a structure of still another camera module according to an embodiment of this application;
FIG. 10 and FIG. 11 are diagrams of a structure of still another camera module according to an embodiment of this application; and
FIG. 12 is a diagram of a mechanical part of a variable aperture assembly according to an embodiment of this application.

### DESCRIPTION OF EMBODIMENTS

The following describes embodiments of this application in detail. Examples of embodiments of this application are shown in the accompanying drawings. In the accompanying drawings, same or similar reference numerals indicate same or similar elements or elements having same or similar functions. The following embodiments described with reference to the accompanying drawings are examples, and are merely intended to explain this application, but should not be construed as a limitation on this application.

Unless otherwise defined, a technical term or a scientific term used herein shall have a general meaning understood by a person of ordinary skill in the technical field of this application. In descriptions of this application, it should be understood that orientations or position relationships indicated by terms such as "center", "longitudinal", "lateral", "up", "down", "front", "back", "left", "right", "vertical", "horizontal", "top", "bottom", "inside", and "outside" are orientations or position relationships that are shown based on the accompanying drawings, and are merely intended to facilitate the descriptions of this application and simplify the descriptions, but are not intended to indicate or imply that an indicated apparatus or element needs to have a specific orientation or needs to be constructed and operated in a specific orientation, and therefore cannot be understood as a limitation on this application.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and variants of the terms all mean "include but are not limited to", unless otherwise specifically emphasized in another manner.

Before embodiments of this application are described, some terms that may be used in the following content are first explained and described.

A photosensitive component, or referred to as an image sensor, is a device that converts an optical image into an electronic signal, and is widely used in a digital camera and another electronic optical device. In the past, an image sensor used an analog signal, such as a video camera tube (video camera tube). Nowadays, image sensors are mainly divided into a charge-coupled device (charge-coupled device, CCD) and a complementary metal-oxide semiconductor (complementary metal-oxide semiconductor, CMOS) active pixel sensor (active pixel sensor).

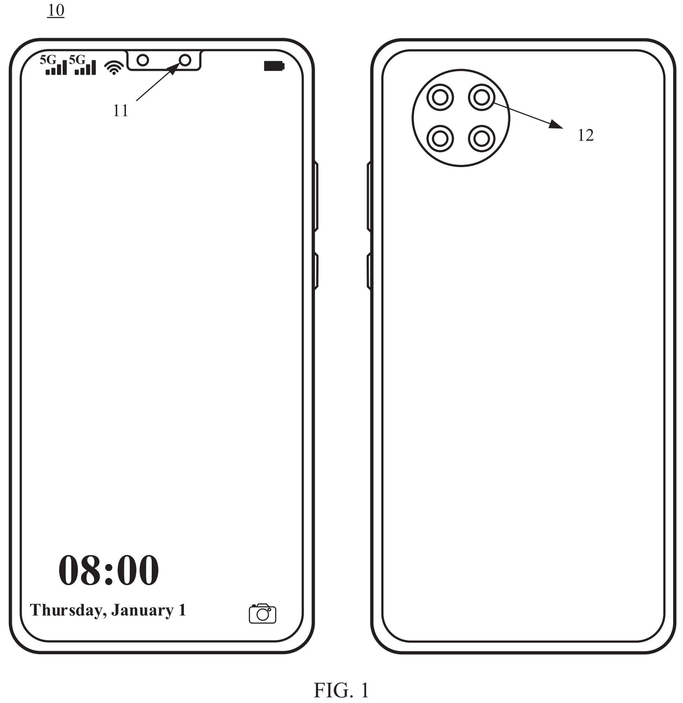

FIG. 1 shows an electronic device 10 according to an embodiment of this application. The electronic device 10 may include a front-facing camera module 11 and/or a rear-facing camera module 12. The camera module provided in this application may be the front-facing camera module 11 or the rear-facing camera module 12. In some examples, the electronic device 10 includes a middle frame, and the front-facing camera module 11 and/or the rear-facing camera module 12 may be fastened to the middle frame, to be mounted in the electronic device 10.

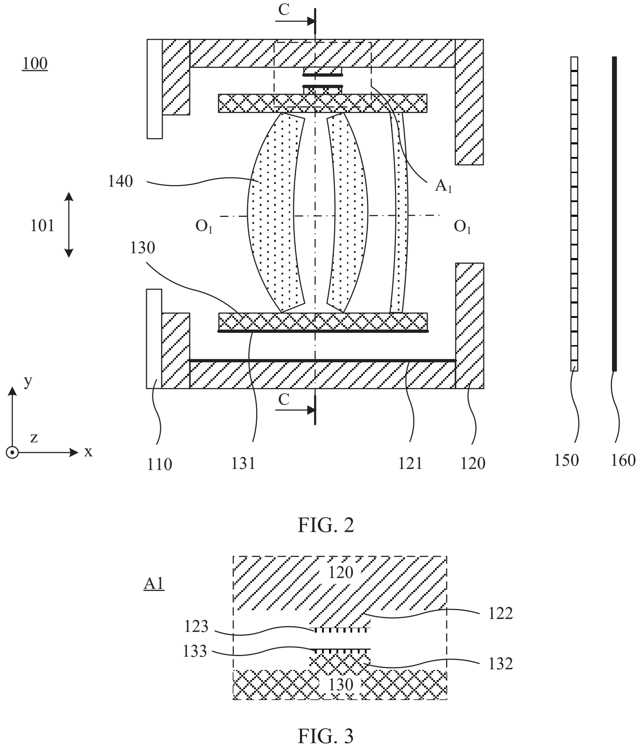

FIG. 2 shows a first camera module 100 according to an embodiment of this application. The first camera module 100 may include a first fastening member 120, a first movable part 130, a lens element 140, and a photosensitive component 160. Light from a photographed object may be incident to the photosensitive component 160 after passing through the lens element 140, to form an image.

The first camera module 100 may further include an aperture 110. The aperture 110 may be disposed on a side that is of the lens element 140 and that is away from the photosensitive component 160. The aperture 110 may be configured to adjust a size of a light beam projected to the lens element 140.

The first camera module 100 may further include a filter 150. The filter 150 may be disposed between the lens element 140 and the photosensitive component 160, and may be disposed close to the photosensitive component 160. The filter 150 may filter out light of some wavelengths or frequencies in imaging light. For example, the filter 150 may be an infrared cutoff filter or a blue glass filter.

In some examples, the first movable part 130 may be configured to fasten the lens element 140. For example, the first movable part 130 may be of a tubular structure with openings at two ends. It may be understood that FIG. 2 shows a cross section that is of the tubular first movable part 130 and that passes through an optical axis of the lens element. An inner wall of the first movable part 130 may be provided with grooves configured to clamp a periphery of the lens element 140. The lens element 140 may be mounted on the first movable part 130 through the grooves, so that the lens element 140 is relatively fastened to the first movable part 130. There may be one or more lens elements 140. This is not limited in this application.

The first movable part 130 may move in a first plane (a y-z plane in FIG. 2). In some examples, the first fastening member 120 may be configured to limit a stroke of the first movable part 130 moving in the first plane.

In some examples, the first fastening member 120 may be similar to a housing structure with holes at two ends, and the first movable part 130 may be disposed inside the first fastening member 120, or the first fastening member 120 may be sleeved on an outer side of the first movable part 130. There may be a specific spacing between the first movable part 130 and the first fastening member 120, so that the first movable part 130 can move in internal space of the first fastening member 120 and the first plane.

For example, the first movable part 130 moves in the first fastening member 120 in a direction 101 in FIG. 2. The first movable part 130 located inside the first fastening member 120 may approach or move away from an inner wall of the first fastening member 120 in the direction 101.

In a process in which the first movable part 130 moves in the direction 101, the first movable part 130 may collide with the first fastening member 120. During the collision of the two mechanical parts, some debris may be generated. The debris may be located on a path of imaging light propagation, and therefore may adversely affect imaging quality of the camera module.

For example, the first movable part 130 may include a first collision surface 131 that may collide with the first fastening member 120. Correspondingly, the first fastening member 120 may include a second collision surface 121 that may collide with the first collision surface 131. In other words, in the process in which the first movable part 130 moves in the direction 101, the first collision surface 131 may collide with the second collision surface 121.

In some examples, the first collision surface 131 may be a continuous region on an outer wall of the first movable part 130. Distances between different positions in the region and the second collision surface 121 are equal. In other words, when the first collision surface 131 collides with the second collision surface 121, different parts on the first collision surface 131 collide with the second collision surface 121 at the same time. Similarly, the second collision surface 121 may be a continuous region on the inner wall of the first fastening member 120. Distances between different positions in the region and the first collision surface 131 are equal. In other words, when the first collision surface 131 collides with the second collision surface 121, different parts on the second collision surface 121 collide with the first collision surface 131 at the same time.

In some examples, a protrusion may be disposed on an outer wall of a side that is of the first movable part 130 and that is close to the first fastening member 120. In a process in which the first movable part 130 moves in the first plane, the protrusion may be configured to be in contact with or collide with the first fastening member 120, and a surface that is of the protrusion and that is in contact with or collides with the first fastening member 120 may be considered as a collision surface of the first movable part 130. In some scenarios, this protrusion may also be referred to as a stopper.

For example, FIG. 3 is a partially enlarged view of a region A1 in FIG. 2. A surface that is of a first stopper 132 and that is close to the first fastening member 120 may be referred to as a third collision surface 133. With reference to FIG. 2 and FIG. 3, the first movable part 130 may include the first stopper 132. In a process in which the first movable part 130 moves in the direction 101, the first stopper 132 may be in contact with or collide with the first fastening member 120.

A plurality of non-continuous stoppers may be disposed on the first movable part 130, or in other words, there may be a plurality of first stoppers 132. In a process in which the first movable part 130 collides with the first fastening member 120, the plurality of stoppers may be in contact with or collide with the first fastening member 120 at the same time. In other words, the first movable part 130 may include a plurality of collision surfaces. In the process in which the first movable part 130 collides with the first fastening member 120, the plurality of collision surfaces may be in contact with or collide with the first fastening member 120 at the same time. In other words, the collision surface of the first movable part 130 may be formed by combining a plurality of non-continuous regions.

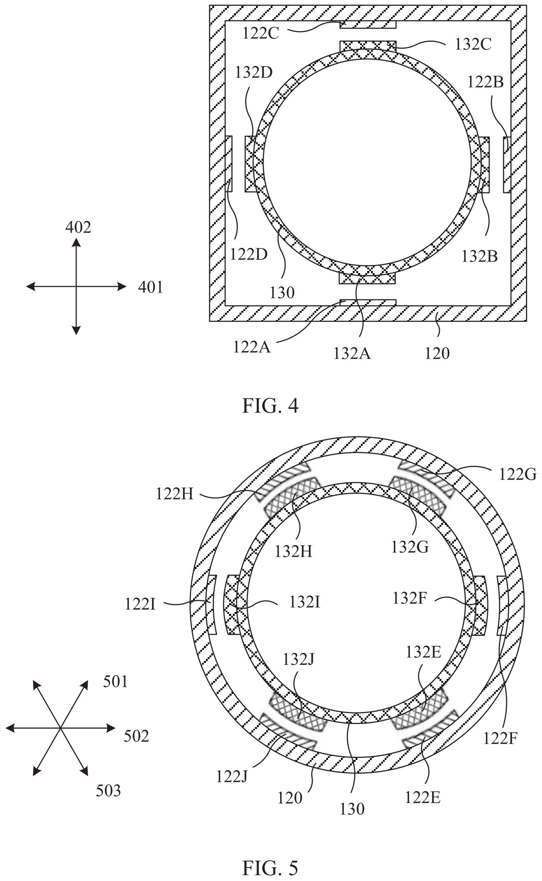

The plurality of stoppers or the plurality of collision surfaces may be distributed around a periphery of the first movable part 130. In a process in which the first movable part 130 moves in the first plane, the first movable part 130 may approach the first fastening member 120 in a plurality of directions. How the plurality of stoppers are distributed on the periphery of the first movable part 130 may match a movement direction configured for the first movable part 130. FIG. 4 and FIG. 5 show some possible movement directions configured for the first movable part 130 and corresponding stopper disposing manners. A plurality of views shown in the figures may be considered as diagrams of cross sections of camera modules with different structures at a position CC in FIG. 2.

As shown in FIG. 4, the first movable part 130 may move in a direction 401 and a direction 402 that are perpendicular to each other. Correspondingly, at least four stoppers 132 may be disposed on the periphery of the first movable part 130, for example, respectively referred to as a stopper 132A, a stopper 132B, a stopper 132C, and a stopper 132D. The stopper 132A and the stopper 132C are distributed on two opposite sides of the first movable part 130 in the direction 402, and the stopper 132B and the stopper 132D are distributed on two opposite sides of the first movable part 130 in the direction 401.

When the first movable part 130 approaches the first fastening member 120 in the direction 401, the stopper 132B and the stopper 132D may be in contact with or collide with the first fastening member 120. Specifically, surfaces that are of the stopper 132B and the stopper 132D and that face the first fastening member 120 may be respectively set as collision surfaces. In a process in which the stopper 132B and the stopper 132D are in contact with or collide with the first fastening member 120, the collision surfaces corresponding to the stopper 132B and the stopper 132D may separately be in contact with or collide with the first fastening member 120. Similarly, when the first movable part 130 approaches the first fastening member 120 in the direction 402, the stopper 132A and the stopper 132C may be in contact with the first fastening member 120. Specifically, surfaces that are of the stopper 132A and the stopper 132C and that face the first fastening member 120 may be respectively set as collision surfaces. In a process in which the stopper 132A and the stopper 132C are in contact with or collide with the first fastening member 120, the collision surfaces corresponding to the stopper 132B and the stopper 132D may separately be in contact with or collide with the first fastening member 120.

As shown in FIG. 5, the first movable part 130 may move in a direction 501, a direction 502, and a direction 503, adjacent two of which have an included angle of 60°. Correspondingly, at least six stoppers 132 may be disposed on the periphery of the first movable part 130, for example, respectively referred to as a stopper 132E, a stopper 132F, a stopper 132G, a stopper 132H, a stopper 132I, and a stopper 132J. The stopper 132E and the stopper 132H are distributed on two opposite sides of the first movable part 130 in the direction 503, the stopper 132F and the stopper 132I are distributed on two opposite sides of the first movable part 130 in the direction 502, and the stopper 132G and the stopper 132J are distributed on two opposite sides of the first movable part 130 in the direction 501.

When the first movable part 130 approaches the first fastening member 120 in the direction 501, the stopper 132G and the stopper 132J may be in contact with or collide with the first fastening member 120. Specifically, surfaces that are of the stopper 132G and the stopper 132J and that face the first fastening member 120 may be respectively set as collision surfaces. In a process in which the stopper 132G and the stopper 132J are in contact with or collide with the first fastening member 120, the collision surfaces corresponding to the stopper 132G and the stopper 132J may separately be in contact with or collide with the first fastening member 120. Similarly, when the first movable part 130 approaches the first fastening member 120 in the direction 502, the stopper 132F and the stopper 132I may be in contact with the first fastening member 120. Specifically, surfaces that are of the stopper 132F and the stopper 132I and that face the first fastening member 120 may be respectively set as collision surfaces. In a process in which the stopper 132F and the stopper 132I are in contact with or collide with the first fastening member 120, the collision surfaces corresponding to the stopper 132F and the stopper 132I may separately be in contact with or collide with the first fastening member 120. When the first movable part 130 approaches the first fastening member 120 in the direction 503, the stopper 132E and the stopper 132H may be in contact with the first fastening member 120. Specifically, surfaces that are of the stopper 132E and the stopper 132H and that face the first fastening member 120 may be respectively set as collision surfaces. In a process in which the stopper 132E and the stopper 132H are in contact with or collide with the first fastening member 120, the collision surfaces corresponding to the stopper 132E and the stopper 132H may separately be in contact with or collide with the first fastening member 120.

Similar to the protrusion structure disposed on the first movable part 130, a protrusion may be disposed on an inner wall of a side that is of the first fastening member 120 and that is close to the first movable part 130. In a process in which the first movable part 130 moves in the first plane, the protrusion may be configured to be in contact with or collide with the first movable part 130, and a surface that is of the protrusion and that is in contact with or collides with the first movable part 130 may be considered as a collision surface of the first fastening member 120. In some scenarios, this protrusion structure may also be referred to as a stopper.

For example, as shown in FIG. 2, the first fastening member 120 may include a second stopper 122. In a process in which the first movable part 130 moves in the direction 101, the second stopper 122 may be in contact with or collide with the first movable part 130. FIG. 3 is a partially enlarged view of the region A1 in FIG. 2. A surface that is of the second stopper 122 and that is close to the first movable part 130 may be referred to as a fourth collision surface 123.

In some examples, the second stopper 122 on the first fastening member 120 may correspond to the first stopper 132 on the first movable part 130. In this way, the collision between the first movable part 130 and the first fastening member 120 may be understood as a collision between the first stopper 132 and the second stopper 122, or may be understood as a collision between the third collision surface 123 and the fourth collision surface 133.

FIG. 4 and FIG. 5 are diagrams of examples of structures of two camera modules of the foregoing structures.

As described above, in FIG. 4, stoppers 132A, 132C, 132B, and 132D that are respectively distributed in the direction 401 and the direction 402 are disposed on the outer wall of the first movable part 130. In some examples, stoppers 122A, 122B, 122C, and 122D respectively corresponding to the stopper 132A, the stopper 132B, the stopper 132C, and the stopper 132D may be disposed on the inner wall of the first fastening member 120. The stopper 122A and the stopper 122C are distributed on opposite sides of the inner wall of the first fastening member 120 in the direction 402, and the stopper 122B and the stopper 122D are distributed on opposite sides of the inner wall of the first fastening member 120 in the direction 401.

In a process in which the first movable part 130 approaches the first fastening member 120 in the direction 401, the stopper 132B may be in contact with or collide with the stopper 122B, or the stopper 132D may be in contact with or collide with the stopper 122D. In a process in which the first movable part 130 approaches the first fastening member 120 in the direction 402, the stopper 132A may be in contact with or collide with the stopper 122A, or the stopper 132C may be in contact with or collide with the stopper 122C.

A surface that is of the stopper 122A and that is in contact with the stopper 132A may be considered as the third collision surface 123, and a surface that is of the stopper 132A and that is in contact with the stopper 122A may be considered as the fourth collision surface 133. Similarly, a surface that is of the stopper 122B and that is in contact with the stopper 132B, a surface that is of the stopper 122C and that is in contact with the stopper 132C, and a surface that is of the stopper 122D and that is in contact with the stopper 132D each may also be considered as the third collision surface 123. A surface that is of the stopper 132B and that is in contact with the stopper 122B, a surface that is of the stopper 132C and that is in contact with the stopper 122C, and a surface that is of the stopper 132D and that is in contact with the stopper 122D each may also be considered as the fourth collision surface 133.

As described above, in FIG. 5, the stopper 132E, the stopper 132F, the stopper 132G, the stopper 132H, the stopper 132G, and the stopper 132H that are separately distributed in the direction 501, the direction 502, and the direction 503 are disposed on the outer wall of the first movable part 130. In some examples, the stopper 122E, the stopper 122F, the stopper 122G, the stopper 122H, the stopper 122I, and the stopper 122J respectively corresponding to the foregoing six stoppers may be disposed on the inner wall of the first fastening member 120. The stopper 122E and the stopper 122H are distributed on two opposite sides of the inner wall of the first fastening member 120 in the direction 503, the stopper 122F and the stopper 122I are distributed on two opposite sides of the inner wall of the first fastening member 120 in the direction 502, and the stopper 122G and the stopper 122J are distributed on two opposite sides of the inner wall of the first fastening member 120 in the direction 501.

In a process in which the first movable part 130 approaches the first fastening member 120 in the direction 501, the stopper 132G may be in contact with or collide with the stopper 122G, or the stopper 132J may be in contact with or collide with the stopper 122J. In a process in which the first movable part 130 approaches the first fastening member 120 in the direction 502, the stopper 132F may be in contact with or collide with the stopper 122F, or the stopper 132I may be in contact with or collide with the stopper 122I. In a process in which the first movable part 130 approaches the first fastening member 120 in the direction 501, the stopper 132G may be in contact with or collide with the stopper 122G, or the stopper 132J may be in contact with or collide with the stopper 122J.

A surface that is of the stopper 122E and that is in contact with the stopper 132E may be considered as the third collision surface 123, and a surface that is of the stopper 132E and that is in contact with the stopper 122E may be considered as the fourth collision surface 133. Similarly, a surface that is of the stopper 122F and that is in contact with the stopper 132F, a surface that is of the stopper 122G and that is in contact with the stopper 132G, a surface that is of the stopper 122H and that is in contact with the stopper 132H, and a surface that is of the stopper 122I and that is in contact with the stopper 132I each may also be considered as the third collision surface 123. A surface that is of the stopper 132F and that is in contact with the stopper 122F, a surface that is of the stopper 132G and that is in contact with the stopper 122G, a surface that is of the stopper 132H and that is in contact with the stopper 122H, and a surface that is of the stopper 132I and that is in contact with the stopper 132I each may also be considered as the fourth collision surface 133.

The first stopper 132 and the second stopper 122 are disposed correspondingly, that is, a specific structure is separately disposed on the first movable part 130 and the first fastening member 120 for interaction between the first movable part 130 and the first fastening member 120. The first stopper 132 and the second stopper 122 may be provided with a material that is more suitable for friction and a collision, for example, a material with better wear resistance performance and better deformation performance. Implementation of this solution helps reduce a probability that debris and particles caused by a collision and wear between different mechanical parts in the camera module affect imaging quality.

In some examples, the second stopper 122 on the first fastening member 120 may correspond to the first collision surface 131, and the first stopper 132 on the first movable part 130 may correspond to the second collision surface 121. In other words, the second stopper 122 on the first fastening member 120 may not correspond to the first stopper 132 on the first movable part 130. In this case, in a process in which the first movable part 130 collides with the first fastening member 120, the first stopper 132 disposed on the first movable part 130 may be in contact with or collide with a region that is on the inner wall of the first fastening member 120 and that is not the second stopper 122, and the second stopper 122 disposed on the first fastening member 120 may be in contact with or collide with a region that is on the outer wall of the first movable part 130 and that is not the first stopper 132.

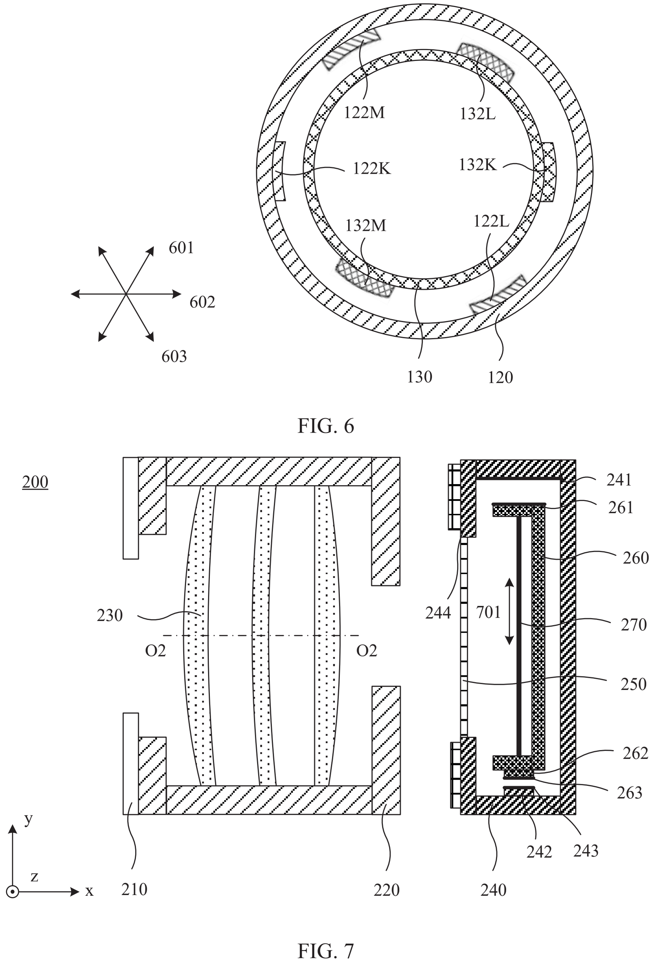

FIG. 6 is a diagram of an example of a structure of a camera module of the foregoing structure. The first movable part 130 may move in a direction 601, a direction 602, and a direction 603, adjacent two of which have an included angle of 60°. Correspondingly, a plurality of stoppers 132 may be disposed on the periphery of the first movable part 130, for example, respectively referred to as a stopper 132K, a stopper 132L, and a stopper 132M. The stopper 132L and the stopper 132M are distributed on two opposite sides of the first movable part 130 in the direction 601, and the stopper 132K is distributed on an outer side of the first movable part 130 in the direction 602.

A plurality of stoppers 122 may be disposed on the inner wall of the first fastening member 120, for example, respectively referred to as a stopper 122K, a stopper 122L, and a stopper 122M. The stopper 122L and the stopper 122M are distributed on two opposite sides of the first fastening member 120 in the direction 603, and the stopper 122K is distributed on the inner wall of the first fastening member 120 in the direction 602.

When the first movable part 130 moves in the direction 601 and collides with the first fastening member 120, the stopper 132I and the stopper 132M that are located on the outer side of the first movable part 130 may be in contact with or collide with the inner wall of the first fastening member 120. When the first movable part 130 moves in the direction 602 and collides with the first fastening member 120, the stopper 132K located on the outer side of the first movable part 130 may be in contact with or collide with the inner wall of the first fastening member 120. Alternatively, a region that is on the outer wall of the first movable part 130 and that is not a stopper may be in contact with or collide with the stopper 122K located on the inner wall of the first fastening member 120. When the first movable part 130 moves in the direction 603 and collides with the first fastening member 120, the outer wall of the first movable part 130 may be in contact with or collide with the stopper 122L or the stopper 122M located on the inner wall of the first fastening member 120.

A stopper is disposed only on a side that is of the first fastening member 120 or the first movable part 130 and on which the first fastening member 120 and the first movable part 130 collide with each other, and movement space that needs to be reserved between the first fastening member 120 and the first movable part 130 is smaller. Implementation of this technical solution helps improve utilization efficiency of internal space of the camera module, and helps reduce a size of the camera module to some extent.

The collision surface disposed on the first movable part 130 may be a plane, a convex surface, or a concave surface, and a shape of the collision surface may match a shape of a surface that is of the first movable part 130 and that is in contact with the collision surface. When a pair of collision surfaces in contact with each other are respectively a concave surface and a convex surface, a surface arc of the concave surface may match a surface arc of the convex surface.

For example, in FIG. 2, both the first collision surface 131 and the second collision surface 121 may be planes.

For example, in FIG. 4, collision surfaces of the stopper 132A, the stopper 132B, the stopper 132C, and the stopper 132D are all planes. Correspondingly, collision surfaces of the stopper 122A, the stopper 122B, the stopper 122C, and the stopper 122D that respectively correspond to the stopper 132A, the stopper 132B, the stopper 132C, and the stopper 132D may also be all planes.

For example, in FIG. 5, collision surfaces of the stopper 132E, the stopper 132F, the stopper 132G, the stopper 132H, and the stopper 132I are all convex surfaces, and collision surfaces of the stopper 122E, the stopper 122F, the stopper 122G, the stopper 122H, and the stopper 122I that respectively correspond to the six stoppers may all be concave surfaces. In a pair of opposite collision surfaces, a surface shape of a concave-surface collision surface matches a surface shape of a convex-surface collision surface. For example, a surface shape of a collision surface of the stopper 132E matches a surface shape of a collision surface of the stopper 122E.

For example, in FIG. 6, the inner wall of the first fastening member 120 is a concave surface, and collision surfaces of the stopper 132K, the stopper 132L, and the stopper 132M that collide with the inner wall of the first fastening member 120 may all be convex surfaces. The outer wall of the first movable part 130 is a convex surface, and collision surfaces of the stopper 122K, the stopper 122L, and the stopper 122M that collide with the outer wall of the first movable part 130 may all be concave surfaces. In a pair of opposite collision surfaces, a surface shape of a concave-surface collision surface matches a surface shape of a convex-surface collision surface. For example, a surface shape of a collision surface of the stopper 132K matches a surface shape of a collision position of the inner wall of the first fastening member 120, and a surface shape of a collision surface of the stopper 122K matches a surface shape of a collision position of the outer wall of the first movable part 130.

The first plane in which the first movable part 130 moves is perpendicular to an optical axis O1O1 of the lens element 140. In a process in which the first movable part 130 drives the lens element 140 to move in the first plane, a position of an incident point of light on the lens element 140 may change, so that a position at which imaging light is incident to the photosensitive component 160 can be adjusted to some extent, that is, an image stabilization function of the first camera module 100 is implemented.

Disposing of a pair of collision surfaces with matched shapes helps increase a contact area between a fastening member and a movable part in a collision process, helps improve stability of a movement process and a braking process of the movable part, helps improve reliability of an image stabilization function of a camera module, and helps improve imaging quality of the camera module.

The first collision surface 131 may be considered as a large region that is on the outer wall of the first movable part 130 and that is continuous with each other, and the third collision surface 133 may be considered as one region on the outer wall of the first movable part 130 or a plurality of regions that are not continuous with each other on the outer wall of the first movable part 130. Similarly, the second collision surface 121 may be considered as a large region that is on the inner wall of the first fastening member 120 and that is continuous with each other, and the fourth collision surface 143 may be considered as one region on the inner wall of the first fastening member 120 or a plurality of regions that are not continuous with each other on the inner wall of the first fastening member 120.

It should be noted that, in this application, a size, a quantity, a shape, distribution, a mutual relationship, or the like of collision surfaces on which the first movable part 130 is in contact with or collides with the first fastening member 120 is not limited. The foregoing descriptions of the first collision surface 131, the third collision surface 132, and the like are merely examples, and should not be construed as a limitation on this application. In some examples, the first movable part 130 and the first fastening member 120 may alternatively employ a manner of cooperation between a protrusion and a recess. For example, a protrusion structure is disposed on the first movable part 130, and a recess structure is disposed on the first fastening member 120. When the first movable part 130 collides with the first fastening member 120, the protrusion structure on the first movable part 130 may extend into the recess structure on the first fastening member 120.

To reduce a probability of dust generation caused by the collision between the first movable part 130 and the first fastening member 120, in some examples, the collision surface of the first movable part 130 and/or the first fastening member 120 may be coated with a specific amount of dustproof materials.

For example, the first collision surface 131 may be coated with the dustproof material, or the second collision surface 121 may be coated with the dustproof material, or both the first collision surface 131 and the second collision surface 121 may be coated with the dustproof material.

For example, the third collision surface 133 may be coated with the dustproof material, or the fourth collision surface 123 may be coated with the dustproof material, or both the third collision surface 133 and the fourth collision surface 123 may be coated with the dustproof material.

The dustproof material may be one or more of the following: an oil-based material, a lipid-based material, or a soft rubber-like material. The oil-based material may be mineral oil, synthetic oil, animal or vegetable oil, water-based liquid, or the like. The lipid-based material may be a soap-based lipid, a hydrocarbon-based lipid, an inorganic lipid, an organic lipid, or the like. The soft rubber-like material may be silicone, a thermoplastic elastomer (thermoplastic elastomer, TPE), thermoplastic polyurethane (thermoplastic polyurethane, TPU) elastomer rubber, polyvinyl chloride (polyvinyl chloride, PVC), rubber, or the like.

The dustproof material may include a material with good high-temperature resistance, low-temperature stability, oxidation resistance, hydrophobicity, electrical insulation, and the like.

In some examples, the dustproof material may include one or more of the following materials: a fluorine-containing organic compound, a silicon-containing organic compound, or a hydrocarbon organic compound. In other words, the dustproof material may include only any one of the fluorine-containing organic compound, the silicon-containing organic compound, or the hydrocarbon organic compound, or the dustproof material may include two or three types of organic compounds in the fluorine-containing organic compound, the silicon-containing organic compound, or the hydrocarbon organic compound.

When the dustproof material includes a plurality of types of organic compounds of the foregoing three types of organic compounds, component content of different types of organic compounds in the dustproof material is not limited in this application.

In some examples, a main composition of the dustproof material may include one or more of functional groups: -CF-, -CF₂-, or -CF₃.

For example, the composition of the dustproof material including the foregoing functional group may be one or more of the following: fluorocarbon, fluoroether, fluoroalcohol, fluoroketone, or fluorocarboxylic acid. For example, the dustproof material may include fluorinated oil and/or fluorinated resin.

In some scenarios, the fluorocarbon may also be referred to as a fluorinated carbon-based organic compound. For example, the fluorocarbon may be fluoroalkane, fluoroolefin, or fluoroalkyne, for example, carbon tetrafluoride, tetrafluoroethylene, or hexafluoropropylene.

In some scenarios, the fluoroether may also be referred to as a fluorinated ether-based organic compound. For example, the fluoroether may be perfluoroethyl ether, difluoroethyl ether, or trifluoroethyl ether.

For example, the fluoroalcohol may be trifluoromethanol, perfluoro ethanol, or perfluoro propanol. The fluoroketone may be perfluoroacetone, difluorohexanone, trifluoromethyl ketone, or the like. The fluorocarboxylic acid may be difluoroacetic acid, trifluoromethylpropionic acid, heptafluorodecic acid, or the like.

For example, in this application, functional groups and chemical bonds of a component of the dustproof material may be determined through a Fourier transform infrared spectroscopy (Fourier transform infrared spectroscopy, FTIR) test. An FTIR may be used to test an absorption characteristic of a to-be-tested sample for infrared light to analyze types of a chemical functional group and a chemical bond included in a compound molecule included in the to-be-tested sample. In an FTIR spectrum, a horizontal coordinate usually indicates a wave number (cm⁻¹), and indicates a frequency of infrared radiation. A vertical coordinate indicates a transmittance, an absorbance, a reflectivity, or the like, and reflects an absorption degree of the to-be-tested sample for infrared light of a specific wavelength.

For example, an FTIR test is performed on the dustproof material. If an absorption peak may be detected near a wave number of 1240 cm⁻¹, it may indicate that a functional group -CF-exists in the component of the dustproof material. If an absorption peak may be detected near a wave number of 1190 cm⁻¹, it may indicate that a functional group -CF₂- exists in the component of the dustproof material. If an absorption peak may be detected near a wave number of 1306 cm⁻¹, it may indicate that a functional group -CF₃ exists in the component of the dustproof material.

A test result of the FTIR may further indicate that the component of the dustproof material includes a carbon element and a fluorine element. Based on the test result of the FTIR, it may be determined that the component of the dustproof material may be a fluorinated carbon-based organic compound. For example, the component of the dustproof material may be polytetrafluoroethylene (C₂F₄)n.

It should be understood that the dustproof material in the foregoing composition may further include more functional groups or chemical bonds, for example, -C-C-. This is not limited in this application.

For example, an FTIR test is performed on the dustproof material. If an absorption peak may be detected near a wave number of 990 cm⁻¹, and the absorption peak is sharp and has high intensity, it may indicate that a functional group -C-O-C- exists in the component of the dustproof material. In addition, if an absorption peak may be detected near a wave number of 1240 cm⁻¹ in a test result of the FTIR, it may indicate that a functional group -CF- further exists in the component of the dustproof material. If an absorption peak may be detected near a wave number of 1190 cm⁻¹, it may indicate that a functional group -CF₂- further exists in the component of the dustproof material. If an absorption peak may be detected near a wave number of 1306 cm⁻¹, it may indicate that a functional group -CF₃ further exists in the component of the dustproof material.

The test result of the FTIR may further indicate that the component of the dustproof material includes a carbon element, a fluorine element, and an oxygen element. Based on the test result of the FTIR, it may be determined that the component of the dustproof material may be a fluorinated ether-based organic compound (fluoroether). For example, the component of the dustproof material may be perfluoropolyether (CF₃O[-CF(CF₃)CF₂O-]ₓ(-CF₂O-)yCF₃), perfluoroethyl ether, or difluoroethyl ether.

It should be understood that the dustproof material in the foregoing composition may further include more functional groups or chemical bonds, for example, -C-C-. This is not limited in this application.

In some examples, a main component of the dustproof material may include a functional group -Si-O-, and the main component of the dustproof material may further include one or more of the following functional groups: -CH₃, -CH₂-, or -CH-.

For example, a composition of the dustproof material including the foregoing functional group may be a silicon-containing organic compound. For example, the silicon-containing organic compound may be one or more of the following: silane, silanol, or organosiloxane.

For example, the silane may be methyl silane or dimethyl silane, and the silanol may be trimethyl silanol or triethoxy silanol.

For example, the organosiloxane may be dimethylsiloxane, polydimethylsiloxane (C₂H₆OSi)n, vinyl siloxane, or silicone resin.

Similarly, in this application, functional groups and chemical bonds of a component of the dustproof material may be determined through an FTIR test.

An FTIR test is performed on the dustproof material. If an absorption peak may be detected near a wave number of 1092 cm⁻¹, it may indicate that the component of the dustproof material includes a -Si-O- chemical bond. If an absorption peak may be detected in a wave number range of 3000 cm⁻¹ to 2840 cm⁻¹, it may indicate that the component of the dustproof material further includes one or more of the following functional groups: -CH₃, -CH₂-, or -CH-.

A test result of the FTIR may further indicate that the component of the dustproof material includes a carbon element, a silicon element, and an oxygen element. Based on the test result of the FTIR, it may be determined that the component of the dustproof material may include organosiloxane. For example, the component of the dustproof material may include polyorganosiloxane or silicone resin.

It should be understood that the dustproof material in the foregoing composition may further include more functional groups or chemical bonds, for example, -Si-C-. This is not limited in this application.

In some examples, a main component of the dustproof material may include only one or more of the functional groups: -CH₃, -CH₂-, or -CH-.

For example, the dustproof material may mainly include a hydrocarbon organic compound, and the hydrocarbon organic compound may be one or more of alkane, olefin, aromatic hydrocarbon, or the like.

For example, the alkane may include straight-chain alkane or cycloalkane, for example, straight-chain alkane or cycloalkane including 15 to 40 carbon atoms. The aromatic hydrocarbon may include low-molecular-weight polycyclic aromatic hydrocarbon or the like.

For example, the olefin may include polyalpha olefin (polyalpha olefin, PAO). Herein, the polyalpha olefin is an organic compound obtained through a polymerization reaction and the like of alpha olefin. The alpha olefin is a type of monoolefin that has one double bond located at a molecular chain end (that is, at a first carbon atom). Common alpha olefin includes ethylene, propylene, 1-butene, 1-hexene, and the like.

Similarly, in this application, functional groups and chemical bonds of a component of the dustproof material may be determined through an FTIR test.

An FTIR test is performed on the dustproof material. If absorption peaks are detected near wave numbers of 2960 cm⁻¹, 2870 cm⁻¹, and 1380 cm⁻¹, it may be determined that the component of the dustproof material may include a functional group -CH₃. If absorption peaks may be detected near wave numbers of 2930 cm⁻¹ and 2850 cm⁻¹, it may be determined that the component of the dustproof material may include a functional group -CH₂-. If an absorption peak may be detected near a wave number of 1460 cm⁻¹, it may be determined that the component of the dustproof material may include an alkyl. If an absorption peak is detected near a wave number of 722 cm⁻¹, it may be determined that the component of the dustproof material may include alkane with a plurality of carbon atoms.

A test result of the FTIR may further indicate that the component of the dustproof material includes a carbon element and a hydrogen element. Based on the test result of the FTIR, it may be determined that the component of the dustproof material may include one or more of the functional groups: -CH₃, -CH₂-, or -CH-. For example, the component of the dustproof material may include the polyalpha olefin.

In some examples, the dustproof material may include a plurality of types of organic compounds in the fluorine-containing organic compound, the silicon-containing organic compound, or the hydrocarbon organic compound, or in other words, the dustproof material may be a mixture including a plurality of types of organic compounds in the fluorine-containing organic compound, the silicon-containing organic compound, or the hydrocarbon organic compound. An FTIR test is performed on a plurality of different types of materials, and a detection result may reflect characteristic peaks of different functional groups in the different types of materials.

For example, the dustproof material may include one or more of the following: the fluorinated carbon-based organic compound, the fluorinated ether-based organic compound, the organosiloxane, or the polyalpha olefin.

For example, for an FTIR test on a dustproof material including the fluorinated carbon-based organic compound and the fluorinated ether-based organic compound, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and organopolysiloxane, characteristic peaks reflecting stretching vibration of the functional group -Si-O- and one or more of the functional groups: -CF-, -CF₂-, or -CF₃ may be detected.

For example, for an FTIR test on a dustproof material including the fluorinated ether-based organic compound and the organopolysiloxane, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and the polyalpha olefin, characteristic peaks reflecting stretching vibration of one or more of the functional groups: -CF-, -CF₂-, or -CF₃ and one or more of the functional groups: -CH₃, -CH₂-, or -CH- may be detected.

For example, for an FTIR test on a dustproof material including the fluorinated ether-based organic compound and the polyalpha olefin, characteristic peaks reflecting stretching vibration of the functional group -C-O-C- and one or more of the functional groups: -CH₃, -CH₂-, or -CH- may be detected.

It should be noted that, performing component detection on the dustproof material through the FTIR is merely a test method for determining the component of the dustproof material, and should not be considered as a limitation on the component of the dustproof material. There are further a plurality of methods for determining the component of the dustproof material, for example, a nuclear magnetic resonance test and a Raman spectroscopy test. This is not limited in this application.

It should be further noted that the test result of the FTIR is affected by a plurality of factors such as an environment factor, a sample factor, and an operation method. Errors introduced by these factors may cause a deviation of the test result to some extent. In other words, a position of the characteristic peak reflected by the component of the dustproof material in the test result of the FTIR is merely an example for description. An actual position of the characteristic peak may have a deviation from a position of the characteristic peak provided in this application. The position of the characteristic peak in the foregoing example should not be considered as a limitation on this application.

In some examples, the dustproof material may be a material in a liquid state at a normal temperature. The dustproof material in a liquid state is easy to be coated on the collision surface of the camera module, which helps simplify a processing and production process of the camera module. For example, an energy storage modulus E of the dustproof material at 25°C satisfies: E≤50 kPa. For example, E of the dustproof material at 25°C may be 40 kPa, 30 kPa, 20 kPa, or 10 kPa.

In an actual manufacturing and production process, the dustproof material in a liquid state may be sprayed at a plurality of points on different regions of the collision surface based on an area of the collision surface, and then the dustproof material with fluidity is made to flow and cover the collision surface through vibration.

In some examples, the dustproof material has specific adhesion, so that debris, dust, or the like in the camera module can be adhered to the dustproof material. For example, a viscosity η of the dustproof material at 25°C satisfies: η≥5000 mPa·s. For example, the viscosity η of the dustproof material at 25°C may be 10000 mPa·s, 15000 mPa·s, 20000 mPa·s, or 25000 mPa·s.

To improve stability of the dustproof material and improve image stabilization performance and imaging quality stability in a use process of the camera module, in some examples, the dustproof material may have a specific high-temperature resistance characteristic or specific heat resistance stability.

For example, a mass evaporation loss α of the dustproof material at 200°C for 24 hours satisfies: α≤0.25%. For example, α may be 0.20%, 0.15%, 0.10%, or 0.05%.

In some examples, the dustproof material may be applicable to a wide temperature range. For example, in a temperature range from -30°C to 120°C, the energy storage modulus E of the dustproof material can satisfy: E≤150 kPa, and the viscosity η satisfies: η≥4000 mPa·s.

In some examples, the first camera module 100 may further include an accommodating member. The accommodating member may be configured to accommodate the foregoing photosensitive component 160, and an end face of an end that is of the accommodating member and that is close to the lens element 140 may also be coated with the dustproof material.

FIG. 7 shows a second camera module 200 according to an embodiment of this application. The second camera module 200 includes a lens element accommodating member 220, a lens element 230, a second fastening member 240, a second movable part 260, and a photosensitive component 270. Light from a photographed object may be incident to the photosensitive component 270 after passing through the lens element 230, to form an image.

The second camera module 200 may further include an aperture 210. The aperture 210 may be disposed on a side that is of the lens element 230 and that is away from the photosensitive component 270. The aperture 210 may be configured to adjust a size of a light beam projected to the lens element 230.

The second camera module 200 may further include a filter 250. The filter 250 may be disposed between the lens element 230 and the photosensitive component 270, and may be disposed close to the photosensitive component 270. The filter 250 may filter out light of some wavelengths or frequencies in imaging light. For example, the filter 250 may be an infrared cutoff filter or a blue glass filter.

The lens element accommodating member 220 may be configured to fasten the lens element 230, or in other words, the lens element 230 may be mounted inside the lens element accommodating member 220. There may be one or more lens elements 230. This is not limited in this application.

The photosensitive component 270 may be fastened to the second movable part 260, or in other words, the photosensitive component 270 may be mounted on the second movable part 260. For example, the second movable part 260 may be a box-shaped structure with an opening at an end, the opening of the second movable part 260 faces the lens element 230, and a connector may be disposed inside the second movable part 260. The connector may be configured to be fastened to the photosensitive component 270.

In some examples, the second movable part 260 may be configured to move in a second plane, and the second plane may be considered as a y-z plane in FIG. 7. The second fastening member 240 may be configured to limit a stroke of the second movable part 260 moving in the second plane.

For example, the second fastening member 240 may be similar to a housing sleeved on a periphery of the second movable part 260, or in other words, the second movable part 260 may be disposed inside the second fastening member 240. There may be a specific spacing between the second movable part 260 and the second fastening member 240, so that the second movable part 260 can move inside the second fastening member 240 and in the second plane.

For example, the second movable part 260 moves in the second fastening member 240 in a direction 701 in FIG. 7. The second movable part 260 may approach or move away from an inner wall of the second fastening member 240 in the direction 701.

In a process in which the second movable part 260 moves in the second plane, an outer wall of the second movable part 260 may be in contact with or collide with the inner wall of the second fastening member 240. During the collision of the two mechanical parts, some debris may be generated. The debris may be located on a path of imaging light propagation, and therefore may adversely affect imaging quality of the camera module.

In some examples, one or more protrusion-shaped stoppers may be disposed on the outer wall of the second movable part 260. In a movement process of the second movable part 260, these stoppers may be in contact with or collide with the inner wall of the second fastening member 240. For example, refer to FIG. 7. A third stopper 262 may be disposed on the outer wall of the second movable part 260, and a surface that is of the third stopper 262 and that faces the second fastening member 240 may be considered as a fifth collision surface 263. When the second movable part 260 collides with the second fastening member 240, the fifth collision surface 263 of the third stopper 262 may be in contact with or collide with the inner wall of the second fastening member 240.

In some examples, one or more protrusion-shaped stoppers may be disposed on the inner wall of the second fastening member 240. In the movement process of the second movable part 260, these stoppers may be in contact with or collide with the outer wall of the second movable part 260. For example, refer to FIG. 7. A fourth stopper 242 may be disposed on the inner wall of the second fastening member 240, and a surface that is of the fourth stopper 242 and that faces the second movable part 260 may be considered as a sixth collision surface 243. When the second movable part 260 collides with the second fastening member 240, the sixth collision surface 243 of the fourth stopper 242 may be in contact with or collide with the outer wall of the second movable part 260.

In some examples, the third stopper 262 described above may not be disposed on the outer wall of the second movable part 260. In other words, when the second movable part 260 is in contact with or collides with the second fastening member 240, a mutually continuous region on the outer wall of the second movable part 260 is in contact with or collides with the inner wall of the second fastening member 240, instead of the collision surface of the stopper on the outer wall of the second movable part 260 being in contact with or colliding with the inner wall of the second fastening member 240. In other words, for example, the first collision surface 131 in the first camera module 100 may be disposed on the outer wall of the second movable part 260. For example, refer to FIG. 7. A seventh collision surface 261 may be disposed on the second movable part 260. When the second movable part 260 collides with the second fastening member 240, the seventh collision surface 261 collides with the inner wall of the second fastening member 240.

In some examples, the fourth stopper 242 described above may not be disposed on the inner wall of the second fastening member 240. In other words, when the second movable part 260 is in contact with or collides with the second fastening member 240, a mutually continuous region on the inner wall of the second fastening member 240 is in contact with or collides with the outer wall of the second movable part 260, instead of the collision surface of the stopper on the inner wall of the second fastening member 240 being in contact with or colliding with the outer wall of the second movable part 260. In other words, for example, the second collision surface 121 in the first camera module 100 may be disposed on the inner wall of the second fastening member 240. For example, refer to FIG. 7. An eighth collision surface 241 may be disposed on the second fastening member 240. When the second movable part 260 collides with the second fastening member 240, the eighth collision surface 241 collides with the outer wall of the second movable part 260.

In some examples, the fifth collision surface 263 may correspond to the sixth collision surface 243. In other words, when the second movable part 260 collides with the second fastening member 240, the fifth collision surface 263 may collide with the sixth collision surface 243. In this case, a surface shape of the fifth collision surface 263 may match a surface shape of the sixth collision surface 243. For example, both the fifth collision surface 263 and the sixth collision surface 243 may be planes. For another example, the fifth collision surface 263 may be a concave surface, and the sixth collision surface 243 may be a convex surface that matches a shape of the concave surface. For another example, the fifth collision surface 263 may be a convex surface, and the sixth collision surface 243 may be a concave surface that matches a shape of the convex surface.

In some examples, the fifth collision surface 263 may correspond to the eighth collision surface 241. In other words, when the second movable part 260 collides with the second fastening member 240, the fifth collision surface 263 may collide with the eighth collision surface 241. In this case, a surface shape of the fifth collision surface 263 may match a surface shape of the eighth collision surface 241. For example, both the fifth collision surface 263 and the eighth collision surface 241 may be planes. For another example, the fifth collision surface 263 may be a concave surface, and the eighth collision surface 241 may be a convex surface that matches a shape of the concave surface. For another example, the fifth collision surface 263 may be a convex surface, and the eighth collision surface 241 may be a concave surface that matches a shape of the convex surface.

In some examples, the seventh collision surface 261 may correspond to the sixth collision surface. In other words, when the second movable part 260 collides with the second fastening member 240, the seventh collision surface 261 may collide with the sixth collision surface. In this case, a surface shape of the seventh collision surface 261 may match a surface shape of the sixth collision surface. For example, both the seventh collision surface 261 and the sixth collision surface may be planes. For another example, the seventh collision surface 261 may be a concave surface, and the seventh collision surface 261 may be a convex surface that matches a shape of the concave surface. For another example, the seventh collision surface 261 may be a convex surface, and the sixth collision surface may be a concave surface that matches a shape of the convex surface.

In some examples, the seventh collision surface 261 may correspond to the eighth collision surface 241. In other words, when the second movable part 260 collides with the second fastening member 240, the seventh collision surface 261 may collide with the eighth collision surface. In this case, a surface shape of the seventh collision surface 261 may match a surface shape of the eighth collision surface 241. For example, both the seventh collision surface 261 and the eighth collision surface 241 may be planes. For another example, the seventh collision surface 261 may be a concave surface, and the eighth collision surface 241 may be a convex surface that matches a shape of the concave surface. For another example, the seventh collision surface 261 may be a convex surface, and the eighth collision surface 241 may be a concave surface that matches a shape of the convex surface.

In this application, a size, a quantity, a shape, distribution, a mutual relationship, or the like of collision surfaces on which the second movable part 260 is in contact with or collides with the second fastening member 240 is not limited. The foregoing descriptions of the fifth collision surface 263, the seventh collision surface 261, and the like are merely examples, and should not be construed as a limitation on this application.

To reduce a probability of dust generation caused by the collision between the second movable part 260 and the second fastening member 240, in some examples, the collision surface of the second movable part 260 and/or the second fastening member 240 may be coated with a specific amount of dustproof materials.

For example, the seventh collision surface 261 may be coated with the dustproof material, or the eighth collision surface 241 may be coated with the dustproof material, or both the seventh collision surface 261 and the eighth collision surface 241 may be coated with the dustproof material.

For example, the fifth collision surface 263 may be coated with the dustproof material, or the sixth collision surface 243 may be coated with the dustproof material, or both the fifth collision surface 263 and the sixth collision surface 243 may be coated with the dustproof material.

The dustproof material may be one or more of the following: an oil-based material, a lipid-based material, or a soft rubber-like material. The oil-based material may be mineral oil, synthetic oil, animal or vegetable oil, water-based liquid, or the like. The lipid-based material may be a soap-based lipid, a hydrocarbon-based lipid, an inorganic lipid, an organic lipid, or the like. The soft rubber-like material may be silicone, thermoplastic elastomer, thermoplastic polyurethane elastomer rubber chloride, rubber, or the like.

The dustproof material may include a material with good high-temperature resistance, low-temperature stability, oxidation resistance, hydrophobicity, electrical insulation, and the like.

In some examples, the dustproof material may include one or more of the following materials: a fluorine-containing organic compound, a silicon-containing organic compound, or a hydrocarbon organic compound. In other words, the dustproof material may include only any one of the fluorine-containing organic compound, the silicon-containing organic compound, or the hydrocarbon organic compound, or the dustproof material may include two or three types of organic compounds in the fluorine-containing organic compound, the silicon-containing organic compound, or the hydrocarbon organic compound.

When the dustproof material includes a plurality of types of organic compounds of the foregoing three types of organic compounds, component content of different types of organic compounds in the dustproof material is not limited in this application.

In some examples, a main composition of the dustproof material may include one or more of functional groups: -CF-, -CF₂-, or -CF₃.

For example, the composition of the dustproof material including the foregoing functional group may be one or more of the following: fluorocarbon, fluoroether, fluoroalcohol, fluoroketone, or fluorocarboxylic acid. For example, the dustproof material may include fluorinated oil and/or fluorinated resin.

In some scenarios, the fluorocarbon may also be referred to as a fluorinated carbon-based organic compound. For example, the fluorocarbon may be fluoroalkane, fluoroolefin, or fluoroalkyne, for example, carbon tetrafluoride, tetrafluoroethylene, or hexafluoropropylene.

In some scenarios, the fluoroether may also be referred to as a fluorinated ether-based organic compound. For example, the fluoroether may be perfluoroethyl ether, difluoroethyl ether, or trifluoroethyl ether.

For example, the fluoroalcohol may be trifluoromethanol, perfluoro ethanol, or perfluoro propanol. The fluoroketone may be perfluoroacetone, difluorohexanone, trifluoromethyl ketone, or the like. The fluorocarboxylic acid may be difluoroacetic acid, trifluoromethylpropionic acid, heptafluorodecic acid, or the like.

For example, in this application, functional groups and chemical bonds of a component of the dustproof material may be determined through a Fourier transform infrared spectroscopy (Fourier transform infrared spectroscopy, FTIR) test. An FTIR may be used to test an absorption characteristic of a to-be-tested sample for infrared light to analyze types of a chemical functional group and a chemical bond included in a compound molecule included in the to-be-tested sample. In an FTIR spectrum, a horizontal coordinate usually indicates a wave number (cm⁻¹), and indicates a frequency of infrared radiation. A vertical coordinate indicates a transmittance, an absorbance, a reflectivity, or the like, and reflects an absorption degree of the to-be-tested sample for infrared light of a specific wavelength.

For example, an FTIR test is performed on the dustproof material. If an absorption peak may be detected near a wave number of 1240 cm⁻¹, it may indicate that a functional group -CF-exists in the component of the dustproof material. If an absorption peak may be detected near a wave number of 1190 cm⁻¹, it may indicate that a functional group -CF₂- exists in the component of the dustproof material. If an absorption peak may be detected near a wave number of 1306 cm⁻¹, it may indicate that a functional group -CF₃ exists in the component of the dustproof material.

A test result of the FTIR may further indicate that the component of the dustproof material includes a carbon element and a fluorine element. Based on the test result of the FTIR, it may be determined that the component of the dustproof material may be a fluorinated carbon-based organic compound. For example, the component of the dustproof material may be polytetrafluoroethylene (C₂F₄)n.

It should be understood that the dustproof material in the foregoing composition may further include more functional groups or chemical bonds, for example, -C-C-. This is not limited in this application.

For example, an FTIR test is performed on the dustproof material. If an absorption peak may be detected near a wave number of 990 cm⁻¹, and the absorption peak is sharp and has high intensity, it may indicate that a functional group -C-O-C- exists in the component of the dustproof material. In addition, if an absorption peak may be detected near a wave number of 1240 cm⁻¹ in a test result of the FTIR, it may indicate that a functional group -CF- further exists in the component of the dustproof material. If an absorption peak may be detected near a wave number of 1190 cm⁻¹, it may indicate that a functional group -CF₂- further exists in the component of the dustproof material. If an absorption peak may be detected near a wave number of 1306 cm⁻¹, it may indicate that a functional group -CF₃ further exists in the component of the dustproof material.

The test result of the FTIR may further indicate that the component of the dustproof material includes a carbon element, a fluorine element, and an oxygen element. Based on the test result of the FTIR, it may be determined that the component of the dustproof material may be a fluorinated ether-based organic compound (fluoroether). For example, the component of the dustproof material may be perfluoropolyether (CF₃O[-CF(CF₃)CF₂O-]ₓ(-CF₂O-)yCF₃), perfluoroethyl ether, or difluoroethyl ether.

It should be understood that the dustproof material in the foregoing composition may further include more functional groups or chemical bonds, for example, -C-C-. This is not limited in this application.

In some examples, a main component of the dustproof material may include a functional group -Si-O-, and the main component of the dustproof material may further include one or more of the following functional groups: -CH₃, -CH₂-, or -CH-.

For example, a composition of the dustproof material including the foregoing functional group may be a silicon-containing organic compound. For example, the silicon-containing organic compound may be one or more of the following: silane, silanol, or organosiloxane.

For example, the silane may be methyl silane or dimethyl silane, and the silanol may be trimethyl silanol or triethoxy silanol.

For example, the organosiloxane may be dimethylsiloxane, polydimethylsiloxane (C₂H₆OSi)n, vinyl siloxane, or silicone resin.

Similarly, in this application, functional groups and chemical bonds of a component of the dustproof material may be determined through an FTIR test.

An FTIR test is performed on the dustproof material. If an absorption peak may be detected near a wave number of 1092 cm⁻¹, it may indicate that the component of the dustproof material includes a -Si-O- chemical bond. If an absorption peak may be detected in a wave number range of 3000 cm⁻¹ to 2840 cm⁻¹, it may indicate that the component of the dustproof material further includes one or more of the following functional groups: -CH₃, -CH₂-, or -CH-.

A test result of the FTIR may further indicate that the component of the dustproof material includes a carbon element, a silicon element, and an oxygen element. Based on the test result of the FTIR, it may be determined that the component of the dustproof material may include organosiloxane. For example, the component of the dustproof material may include polyorganosiloxane or silicone resin.

It should be understood that the dustproof material in the foregoing composition may further include more functional groups or chemical bonds, for example, -Si-C-. This is not limited in this application.

In some examples, a main component of the dustproof material may include only one or more of the functional groups: -CH₃, -CH₂-, or -CH-.

For example, the dustproof material may mainly include a hydrocarbon organic compound, and the hydrocarbon organic compound may be one or more of alkane, olefin, aromatic hydrocarbon, or the like.

For example, the alkane may include straight-chain alkane or cycloalkane, for example, straight-chain alkane or cycloalkane including 15 to 40 carbon atoms. The aromatic hydrocarbon may include low-molecular-weight polycyclic aromatic hydrocarbon or the like.

For example, the olefin may include polyalpha olefin (polyalpha olefin, PAO). Herein, the polyalpha olefin is an organic compound obtained through a polymerization reaction and the like of alpha olefin. The alpha olefin is a type of monoolefin that has one double bond located at a molecular chain end (that is, at a first carbon atom). Common alpha olefin includes ethylene, propylene, 1-butene, 1-hexene, and the like.

Similarly, in this application, functional groups and chemical bonds of a component of the dustproof material may be determined through an FTIR test.

An FTIR test is performed on the dustproof material. If absorption peaks are detected near wave numbers of 2960 cm⁻¹, 2870 cm⁻¹, and 1380 cm⁻¹, it may be determined that the component of the dustproof material may include a functional group -CH₃. If absorption peaks may be detected near wave numbers of 2930 cm⁻¹ and 2850 cm⁻¹, it may be determined that the component of the dustproof material may include a functional group -CH₂-. If an absorption peak may be detected near a wave number of 1460 cm⁻¹, it may be determined that the component of the dustproof material may include an alkyl. If an absorption peak is detected near a wave number of 722 cm⁻¹, it may be determined that the component of the dustproof material may include alkane with a plurality of carbon atoms.

A test result of the FTIR may further indicate that the component of the dustproof material includes a carbon element and a hydrogen element. Based on the test result of the FTIR, it may be determined that the component of the dustproof material may include one or more of the functional groups: -CH₃, -CH₂-, or -CH-. For example, the component of the dustproof material may include the polyalpha olefin.

In some examples, the dustproof material may include a plurality of types of organic compounds in the fluorine-containing organic compound, the silicon-containing organic compound, or the hydrocarbon organic compound, or in other words, the dustproof material may be a mixture including a plurality of types of organic compounds in the fluorine-containing organic compound, the silicon-containing organic compound, or the hydrocarbon organic compound. An FTIR test is performed on a plurality of different types of materials, and a detection result may reflect characteristic peaks of different functional groups in the different types of materials.

For example, the dustproof material may include one or more of the following: the fluorinated carbon-based organic compound, the fluorinated ether-based organic compound, the organosiloxane, or the polyalpha olefin.

For example, for an FTIR test on a dustproof material including the fluorinated carbon-based organic compound and the fluorinated ether-based organic compound, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and organopolysiloxane, characteristic peaks reflecting stretching vibration of the functional group -Si-O- and one or more of the functional groups: -CF-, -CF₂-, or -CF₃ may be detected.

For example, for an FTIR test on a dustproof material including the fluorinated ether-based organic compound and the organopolysiloxane, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and the polyalpha olefin, characteristic peaks reflecting stretching vibration of one or more of the functional groups: -CF-, -CF₂-, or -CF₃ and one or more of the functional groups: -CH₃, -CH₂-, or -CH- may be detected.

For example, for an FTIR test on a dustproof material including the fluorinated ether-based organic compound and the polyalpha olefin, characteristic peaks reflecting stretching vibration of the functional group -C-O-C- and one or more of the functional groups: -CH₃, -CH₂-, or -CH- may be detected.

It should be noted that, performing component detection on the dustproof material through the FTIR is merely a test method for determining the component of the dustproof material, and should not be considered as a limitation on the component of the dustproof material. There are further a plurality of methods for determining the component of the dustproof material, for example, a nuclear magnetic resonance test and a Raman spectroscopy test. This is not limited in this application.

It should be further noted that the test result of the FTIR is affected by a plurality of factors such as an environment factor, a sample factor, and an operation method. Errors introduced by these factors may cause a deviation of the test result to some extent. In other words, a position of the characteristic peak reflected by the component of the dustproof material in the test result of the FTIR is merely an example for description. An actual position of the characteristic peak may have a deviation from a position of the characteristic peak provided in this application. The position of the characteristic peak in the foregoing example should not be considered as a limitation on this application. In some examples, the dustproof material may be a material in a liquid state at a normal temperature. The dustproof material in a liquid state is easy to be coated on the collision surface of the camera module, which helps simplify a processing and production process of the camera module. For example, an energy storage modulus E of the dustproof material at 25°C satisfies: E≤50 kPa. For example, E of the dustproof material at 25°C may be 40 kPa, 30 kPa, 20 kPa, or 10 kPa.

In an actual manufacturing and production process, the dustproof material in a liquid state may be sprayed at a plurality of points on different regions of the collision surface based on an area of the collision surface, and then the dustproof material with fluidity is made to flow and cover the collision surface through vibration.

In some examples, the dustproof material has specific adhesion, so that debris, dust, or the like in the camera module can be adhered to the dustproof material. For example, a viscosity η of the dustproof material at 25°C satisfies: η≥5000 mPa·s. For example, the viscosity η of the dustproof material at 25°C may be 10000 mPa·s, 15000 mPa·s, 20000 mPa·s, or 25000 mPa·s.

To improve stability of the dustproof material and improve image stabilization performance and imaging quality stability in a use process of the camera module, in some examples, the dustproof material may have a specific high-temperature resistance characteristic or specific heat resistance stability.

For example, a mass evaporation loss α of the dustproof material at 200°C for 24 hours satisfies: α≤0.25%. For example, α may be 0.20%, 0.15%, 0.10%, or 0.05%.

In some examples, the dustproof material may be applicable to a wide temperature range. For example, in a temperature range from -30°C to 120°C, the energy storage modulus E of the dustproof material can satisfy: E≤150 kPa, and the viscosity η satisfies: η≥4000 mPa·s.

In some examples, a cover structure 244 may be further disposed on a surface that is of the second fastening member 240 and that faces the lens element 230, and a middle region of the cover structure 244 may be provided with a notch. When the second camera module 200 includes the filter 250, the filter 250 may be mounted at a position of the notch. In some examples, a surface that is of a part other than the notch region on the cover structure 244 and that faces the lens element 230 may also be coated with the dustproof material. The second fastening member 240 and the filter 250 fastened at the position of the notch may enclose a closed structure, and imaging light may be incident to the photosensitive component 270 through the filter 250. Because the dustproof material may have specific adhesion, a surface that is of the cover structure 244 and that faces the lens element 230 except the notch region may be coated with the dustproof material. Dust, particles, debris, and the like from external space of the second fastening member 240 may fall on and be adhered to the dustproof material to some extent. A probability that the dust, the particles, the debris, and the like fall on the filter 250 and interfere with propagation of the imaging light is lower, and imaging quality of the second camera module 200 can be improved to some extent.

In some examples, the second plane in which the second movable part 260 moves may be perpendicular to an optical axis O2O2 of the lens element 230. In a process in which the second movable part 260 drives the lens element 230 to move in the second plane, a position of an incident point of light on the lens element 230 may change, so that a position at which imaging light is incident to the photosensitive component 270 can be adjusted to some extent, that is, an image stabilization function of the second camera module 200 is implemented.

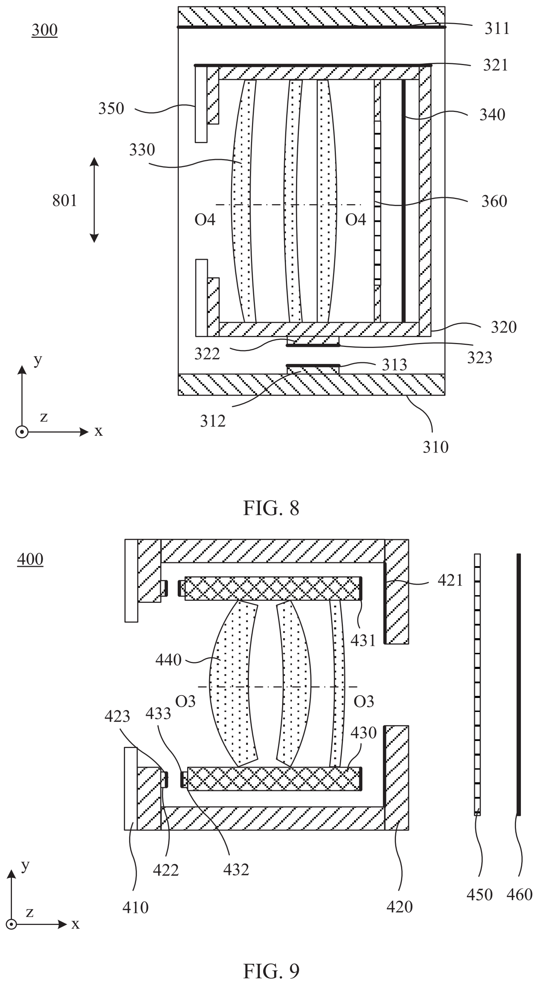

FIG. 8 shows a third camera module 300 according to an embodiment of this application. The third camera module 300 may include a fastening base 310, a support 320, a lens element 330, and a photosensitive component 340. The support 320 may be configured to fasten the lens element 330 and the photosensitive component 340, so that the lens element 330 and the photosensitive component 340 are relatively fastened. Light from a photographed object may be incident to the photosensitive component 340 after passing through the lens element 330, to form an image.

In some scenarios, the fastening base 310 may also be referred to as a pan-tilt fastening base.

The third camera module 300 may further include an aperture 350. The aperture 350 may be disposed on a side that is of the lens element 330 and that is away from the photosensitive component 340. The aperture 350 may be configured to adjust a size of a light beam projected to the lens element 330.

The third camera module 300 may further include a filter 360. The filter 360 may be disposed between the lens element 330 and the photosensitive component 340, and may be disposed close to the photosensitive component 340. The filter 360 may filter out light of some wavelengths or frequencies in imaging light. For example, the filter 360 may be an infrared cutoff filter or a blue glass filter.

In some examples, the support 320 may be configured to move in a fourth plane (a y-z plane in FIG. 8), and the fastening base 310 may be configured to limit a stroke of the support 320 moving in the fourth plane. For example, a magnet or a coil structure may be disposed on a periphery of the support 320, and a magnet or a coil structure may be correspondingly disposed on a periphery of the fastening base 310. A size and a direction of a current in the coil on the support 320 and/or the fastening base 310 may be controlled to drive the support 320 to move in the fourth plane.

For example, the fastening base 310 may be similar to a housing sleeved outside the support 320. In other words, the support 320 may be disposed inside the fastening base 310. There may be a specific spacing between the support 320 and the fastening base 310, so that the support 320 can move inside the fastening base 310 and in the fourth plane.

For example, the support 320 moves in the fastening base 310 in a direction 801 in FIG. 8. The support 320 may approach or move away from an inner wall of the fastening base 310 in the direction 801.

In a process in which the support 320 moves in the fourth plane, an outer wall of the support 320 may be in contact with or collide with the inner wall of the fastening base 310. During the collision of the two mechanical parts, some debris may be generated. The debris may be located on a path of imaging light propagation, and therefore may adversely affect imaging quality of the camera module.

In some examples, one or more protrusion-shaped stoppers may be disposed on the outer wall of the support 320. In a movement process of the support 320, these stoppers may be in contact with or collide with the inner wall of the fastening base 310. For example, refer to FIG. 8. A seventh stopper 322 may be disposed on the outer wall of the support 320, and a surface that is of the seventh stopper 322 and that faces the fastening base 310 may be considered as a thirteenth collision surface 323. When the support 320 collides with the fastening base 310, the thirteenth collision surface 323 of the seventh stopper 322 may be in contact with or collide with the inner wall of the fastening base 310.

In some examples, one or more protrusion-shaped stoppers may be disposed on the inner wall of the fastening base 310. In a movement process of the support 320, these stoppers may be in contact with or collide with the outer wall of the support 320. For example, refer to FIG. 8. An eighth stopper 312 may be disposed on the inner wall of the fastening base 310, and a surface that is of the eighth stopper 312 and that faces the support 320 may be considered as a fourteenth collision surface 313. When the support 320 collides with the fastening base 310, the fourteenth collision surface 313 of the eighth stopper 312 may be in contact with or collide with the outer wall of the support 320.

In some examples, the seventh stopper 322 described above may not be disposed on the outer wall of the support 320. In other words, when the support 320 is in contact with or collides with the fastening base 310, a mutually continuous region on the outer wall of the support 320 is in contact with or collides with the inner wall of the fastening base 310, instead of the collision surface of the stopper on the outer wall of the support 320 being in contact with or colliding with the inner wall of the fastening base 310. In other words, for example, the first collision surface 131 in the first camera module 100 may be disposed on the outer wall of the support 320. For example, refer to FIG. 8. A fifteenth collision surface 321 may be disposed on the support 320. When the support 320 collides with the fastening base 310, the fifteenth collision surface 321 may be in contact with or collide with the inner wall of the fastening base 310.

In some examples, the eighth stopper 312 described above may not be disposed on the inner wall of the fastening base 310. In other words, when the support 320 is in contact with or collides with the fastening base 310, a mutually continuous region on the inner wall of the fastening base 310 is in contact with or collides with the outer wall of the support 320, instead of the collision surface of the stopper on the inner wall of the fastening base 310 being in contact with or colliding with the outer wall of the support 320. In other words, for example, the second collision surface 121 in the first camera module 100 may be disposed on the inner wall of the fastening base 310. For example, refer to FIG. 8. A sixteenth collision surface 311 may be disposed on the fastening base 310. When the support 320 collides with the fastening base 310, the sixteenth collision surface 311 collides with the outer wall of the support 320.

In some examples, the thirteenth collision surface 323 may correspond to the fourteenth collision surface 313. In other words, when the support 320 collides with the fastening base 310, the thirteenth collision surface 323 may collide with the fourteenth collision surface 313. In this case, a surface shape of the thirteenth collision surface 323 may match a surface shape of the fourteenth collision surface 313. For example, both the thirteenth collision surface 323 and the fourteenth collision surface 313 may be planes. For another example, the thirteenth collision surface 323 may be a concave surface, and the fourteenth collision surface 313 may be a convex surface that matches a shape of the concave surface. For another example, the thirteenth collision surface 323 may be a convex surface, and the fourteenth collision surface 313 may be a concave surface that matches a shape of the convex surface.

In some examples, the thirteenth collision surface 323 may correspond to the sixteenth collision surface 311. In other words, when the support 320 collides with the fastening base 310, the thirteenth collision surface 323 may collide with the sixteenth collision surface 311. In this case, a surface shape of the thirteenth collision surface 323 may match a surface shape of the sixteenth collision surface 311. For example, both the thirteenth collision surface 323 and the sixteenth collision surface 311 may be planes. For another example, the thirteenth collision surface 323 may be a concave surface, and the sixteenth collision surface 311 may be a convex surface that matches a shape of the concave surface. For another example, the thirteenth collision surface 323 may be a convex surface, and the sixteenth collision surface 311 may be a concave surface that matches a shape of the convex surface.

In some examples, the fifteenth collision surface 321 may correspond to the sixth collision surface. In other words, when the support 320 collides with the fastening base 310, the fifteenth collision surface 321 may collide with the sixth collision surface. In this case, a surface shape of the fifteenth collision surface 321 may match a surface shape of the sixth collision surface. For example, both the fifteenth collision surface 321 and the sixth collision surface may be planes. For another example, the fifteenth collision surface 321 may be a concave surface, and the fifteenth collision surface 321 may be a convex surface that matches a shape of the concave surface. For another example, the fifteenth collision surface 321 may be a convex surface, and the sixth collision surface may be a concave surface that matches a shape of the convex surface.

In some examples, the fifteenth collision surface 321 may correspond to the sixteenth collision surface 311. In other words, when the support 320 collides with the fastening base 310, the fifteenth collision surface 321 may collide with the eighth collision surface. In this case, a surface shape of the fifteenth collision surface 321 may match a surface shape of the sixteenth collision surface 311. For example, both the fifteenth collision surface 321 and the sixteenth collision surface 311 may be planes. For another example, the fifteenth collision surface 321 may be a concave surface, and the sixteenth collision surface 311 may be a convex surface that matches a shape of the concave surface. For another example, the fifteenth collision surface 321 may be a convex surface, and the sixteenth collision surface 311 may be a concave surface that matches a shape of the convex surface.

In this application, a size, a quantity, a shape, distribution, a mutual relationship, or the like of collision surfaces on which the support 320 is in contact with or collides with the fastening base 310 is not limited. The foregoing descriptions of the thirteenth collision surface 323, the fifteenth collision surface 321, and the like are merely examples, and should not be construed as a limitation on this application.

To reduce a probability of dust generation caused by the collision between the support 320 and the fastening base 310, in some examples, the collision surface of the support 320 and/or the fastening base 310 may be coated with a specific amount of dustproof materials.

For example, the fifteenth collision surface 321 may be coated with the dustproof material, or the sixteenth collision surface 311 may be coated with the dustproof material, or both the fifteenth collision surface 321 and the sixteenth collision surface 311 may be coated with the dustproof material.

For example, the thirteenth collision surface 323 may be coated with the dustproof material, or the fourteenth collision surface 313 may be coated with the dustproof material, or both the thirteenth collision surface 323 and the fourteenth collision surface 313 may be coated with the dustproof material.

The dustproof material may be one or more of the following: an oil-based material, a lipid-based material, or a soft rubber-like material. The oil-based material may be mineral oil, synthetic oil, animal or vegetable oil, water-based liquid, or the like. The lipid-based material may be a soap-based lipid, a hydrocarbon-based lipid, an inorganic lipid, an organic lipid, or the like. The soft rubber-like material may be silicone, thermoplastic elastomer, thermoplastic polyurethane elastomer rubber chloride, rubber, or the like.

The dustproof material may include a material with good high-temperature resistance, low-temperature stability, oxidation resistance, hydrophobicity, electrical insulation, and the like.

In some examples, the dustproof material may include one or more of the following materials: a fluorine-containing organic compound, a silicon-containing organic compound, or a hydrocarbon organic compound. In other words, the dustproof material may include only any one of the fluorine-containing organic compound, the silicon-containing organic compound, or the hydrocarbon organic compound, or the dustproof material may include two or three types of organic compounds in the fluorine-containing organic compound, the silicon-containing organic compound, or the hydrocarbon organic compound.

When the dustproof material includes a plurality of types of organic compounds of the foregoing three types of organic compounds, component content of different types of organic compounds in the dustproof material is not limited in this application.

In some examples, a main composition of the dustproof material may include one or more of functional groups: -CF-, -CF₂-, or -CF₃.

For example, the composition of the dustproof material including the foregoing functional group may be one or more of the following: fluorocarbon, fluoroether, fluoroalcohol, fluoroketone, or fluorocarboxylic acid. For example, the dustproof material may include fluorinated oil and/or fluorinated resin.

In some scenarios, the fluorocarbon may also be referred to as a fluorinated carbon-based organic compound. For example, the fluorocarbon may be fluoroalkane, fluoroolefin, or fluoroalkyne, for example, carbon tetrafluoride, tetrafluoroethylene, or hexafluoropropylene.

In some scenarios, the fluoroether may also be referred to as a fluorinated ether-based organic compound. For example, the fluoroether may be perfluoroethyl ether, difluoroethyl ether, or trifluoroethyl ether.

For example, the fluoroalcohol may be trifluoromethanol, perfluoro ethanol, or perfluoro propanol. The fluoroketone may be perfluoroacetone, difluorohexanone, trifluoromethyl ketone, or the like. The fluorocarboxylic acid may be difluoroacetic acid, trifluoromethylpropionic acid, heptafluorodecic acid, or the like.

For example, in this application, functional groups and chemical bonds of a component of the dustproof material may be determined through a Fourier transform infrared spectroscopy (Fourier transform infrared spectroscopy, FTIR) test. An FTIR may be used to test an absorption characteristic of a to-be-tested sample for infrared light to analyze types of a chemical functional group and a chemical bond included in a compound molecule included in the to-be-tested sample. In an FTIR spectrum, a horizontal coordinate usually indicates a wave number (cm⁻¹), and indicates a frequency of infrared radiation. A vertical coordinate indicates a transmittance, an absorbance, a reflectivity, or the like, and reflects an absorption degree of the to-be-tested sample for infrared light of a specific wavelength.

For example, an FTIR test is performed on the dustproof material. If an absorption peak may be detected near a wave number of 1240 cm⁻¹, it may indicate that a functional group -CF-exists in the component of the dustproof material. If an absorption peak may be detected near a wave number of 1190 cm⁻¹, it may indicate that a functional group -CF₂- exists in the component of the dustproof material. If an absorption peak may be detected near a wave number of 1306 cm⁻¹, it may indicate that a functional group -CF₃ exists in the component of the dustproof material.

A test result of the FTIR may further indicate that the component of the dustproof material includes a carbon element and a fluorine element. Based on the test result of the FTIR, it may be determined that the component of the dustproof material may be a fluorinated carbon-based organic compound. For example, the component of the dustproof material may be polytetrafluoroethylene (C₂F₄)n.

It should be understood that the dustproof material in the foregoing composition may further include more functional groups or chemical bonds, for example, -C-C-. This is not limited in this application.

For example, an FTIR test is performed on the dustproof material. If an absorption peak may be detected near a wave number of 990 cm⁻¹, and the absorption peak is sharp and has high intensity, it may indicate that a functional group -C-O-C- exists in the component of the dustproof material. In addition, if an absorption peak may be detected near a wave number of 1240 cm⁻¹ in a test result of the FTIR, it may indicate that a functional group -CF- further exists in the component of the dustproof material. If an absorption peak may be detected near a wave number of 1190 cm⁻¹, it may indicate that a functional group -CF₂- further exists in the component of the dustproof material. If an absorption peak may be detected near a wave number of 1306 cm⁻¹, it may indicate that a functional group -CF₃ further exists in the component of the dustproof material.

The test result of the FTIR may further indicate that the component of the dustproof material includes a carbon element, a fluorine element, and an oxygen element. Based on the test result of the FTIR, it may be determined that the component of the dustproof material may be a fluorinated ether-based organic compound (fluoroether). For example, the component of the dustproof material may be perfluoropolyether (CF₃O[-CF(CF₃)CF₂O-]ₓ(-CF₂O-)yCF₃), perfluoroethyl ether, or difluoroethyl ether.

It should be understood that the dustproof material in the foregoing composition may further include more functional groups or chemical bonds, for example, -C-C-. This is not limited in this application.

In some examples, a main component of the dustproof material may include a functional group -Si-O-, and the main component of the dustproof material may further include one or more of the following functional groups: -CH₃, -CH₂-, or -CH-.

For example, a composition of the dustproof material including the foregoing functional group may be a silicon-containing organic compound. For example, the silicon-containing organic compound may be one or more of the following: silane, silanol, or organosiloxane.

For example, the silane may be methyl silane or dimethyl silane, and the silanol may be trimethyl silanol or triethoxy silanol.

For example, the organosiloxane may be dimethylsiloxane, polydimethylsiloxane (C₂H₆OSi)n, vinyl siloxane, or silicone resin.

Similarly, in this application, functional groups and chemical bonds of a component of the dustproof material may be determined through an FTIR test.

An FTIR test is performed on the dustproof material. If an absorption peak may be detected near a wave number of 1092 cm⁻¹, it may indicate that the component of the dustproof material includes a -Si-O- chemical bond. If an absorption peak may be detected in a wave number range of 3000 cm⁻¹ to 2840 cm⁻¹, it may indicate that the component of the dustproof material further includes one or more of the following functional groups: -CH₃, -CH₂-, or -CH-.

A test result of the FTIR may further indicate that the component of the dustproof material includes a carbon element, a silicon element, and an oxygen element. Based on the test result of the FTIR, it may be determined that the component of the dustproof material may include organosiloxane. For example, the component of the dustproof material may include polyorganosiloxane or silicone resin.

It should be understood that the dustproof material in the foregoing composition may further include more functional groups or chemical bonds, for example, -Si-C-. This is not limited in this application.

In some examples, a main component of the dustproof material may include only one or more of the functional groups: -CH₃, -CH₂-, or -CH-.

For example, the dustproof material may mainly include a hydrocarbon organic compound, and the hydrocarbon organic compound may be one or more of alkane, olefin, aromatic hydrocarbon, or the like.

For example, the alkane may include straight-chain alkane or cycloalkane, for example, straight-chain alkane or cycloalkane including 15 to 40 carbon atoms. The aromatic hydrocarbon may include low-molecular-weight polycyclic aromatic hydrocarbon or the like.

For example, the olefin may include polyalpha olefin (polyalpha olefin, PAO). Herein, the polyalpha olefin is an organic compound obtained through a polymerization reaction and the like of alpha olefin. The alpha olefin is a type of monoolefin that has one double bond located at a molecular chain end (that is, at a first carbon atom). Common alpha olefin includes ethylene, propylene, 1-butene, 1-hexene, and the like.

Similarly, in this application, functional groups and chemical bonds of a component of the dustproof material may be determined through an FTIR test.

An FTIR test is performed on the dustproof material. If absorption peaks are detected near wave numbers of 2960 cm⁻¹, 2870 cm⁻¹, and 1380 cm⁻¹, it may be determined that the component of the dustproof material may include a functional group -CH₃. If absorption peaks may be detected near wave numbers of 2930 cm⁻¹ and 2850 cm⁻¹, it may be determined that the component of the dustproof material may include a functional group -CH₂-. If an absorption peak may be detected near a wave number of 1460 cm⁻¹, it may be determined that the component of the dustproof material may include an alkyl. If an absorption peak is detected near a wave number of 722 cm⁻¹, it may be determined that the component of the dustproof material may include alkane with a plurality of carbon atoms.

A test result of the FTIR may further indicate that the component of the dustproof material includes a carbon element and a hydrogen element. Based on the test result of the FTIR, it may be determined that the component of the dustproof material may include one or more of the functional groups: -CH₃, -CH₂-, or -CH-. For example, the component of the dustproof material may include the polyalpha olefin.

In some examples, the dustproof material may include a plurality of types of organic compounds in the fluorine-containing organic compound, the silicon-containing organic compound, or the hydrocarbon organic compound, or in other words, the dustproof material may be a mixture including a plurality of types of organic compounds in the fluorine-containing organic compound, the silicon-containing organic compound, or the hydrocarbon organic compound. An FTIR test is performed on a plurality of different types of materials, and a detection result may reflect characteristic peaks of different functional groups in the different types of materials.

For example, the dustproof material may include one or more of the following: the fluorinated carbon-based organic compound, the fluorinated ether-based organic compound, the organosiloxane, or the polyalpha olefin.

For example, for an FTIR test on a dustproof material including the fluorinated carbon-based organic compound and the fluorinated ether-based organic compound, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and organopolysiloxane, characteristic peaks reflecting stretching vibration of the functional group -Si-O- and one or more of the functional groups: -CF-, -CF₂-, or -CF₃ may be detected.

For example, for an FTIR test on a dustproof material including the fluorinated ether-based organic compound and the organopolysiloxane, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and the polyalpha olefin, characteristic peaks reflecting stretching vibration of one or more of the functional groups: -CF-, -CF₂-, or -CF₃ and one or more of the functional groups: -CH₃, -CH₂-, or -CH- may be detected.

For example, for an FTIR test on a dustproof material including the fluorinated ether-based organic compound and the polyalpha olefin, characteristic peaks reflecting stretching vibration of the functional group -C-O-C- and one or more of the functional groups: -CH₃, -CH₂-, or -CH- may be detected.

It should be noted that, performing component detection on the dustproof material through the FTIR is merely a test method for determining the component of the dustproof material, and should not be considered as a limitation on the component of the dustproof material. There are further a plurality of methods for determining the component of the dustproof material, for example, a nuclear magnetic resonance test and a Raman spectroscopy test. This is not limited in this application.

It should be further noted that the test result of the FTIR is affected by a plurality of factors such as an environment factor, a sample factor, and an operation method. Errors introduced by these factors may cause a deviation of the test result to some extent. In other words, a position of the characteristic peak reflected by the component of the dustproof material in the test result of the FTIR is merely an example for description. An actual position of the characteristic peak may have a deviation from a position of the characteristic peak provided in this application. The position of the characteristic peak in the foregoing example should not be considered as a limitation on this application. In some examples, the dustproof material may be a material in a liquid state at a normal temperature. The dustproof material in a liquid state is easy to be coated on the collision surface of the camera module, which helps simplify a processing and production process of the camera module. For example, an energy storage modulus E of the dustproof material at 25°C satisfies: E≤50 kPa. For example, E of the dustproof material at 25°C may be 40 kPa, 30 kPa, 20 kPa, or 10 kPa.

In an actual manufacturing and production process, the dustproof material in a liquid state may be sprayed at a plurality of points on different regions of the collision surface based on an area of the collision surface, and then the dustproof material with fluidity is made to flow and cover the collision surface through vibration.

In some examples, the dustproof material has specific adhesion, so that debris, dust, or the like in the camera module can be adhered to the dustproof material. For example, a viscosity η of the dustproof material at 25°C satisfies: η≥5000 mPa·s. For example, the viscosity η of the dustproof material at 25°C may be 10000 mPa·s, 15000 mPa·s, 20000 mPa·s, or 25000 mPa·s.

To improve stability of the dustproof material and improve image stabilization performance and imaging quality stability in a use process of the camera module, in some examples, the dustproof material may have a specific high-temperature resistance characteristic or specific heat resistance stability.

For example, a mass evaporation loss α of the dustproof material at 200°C for 24 hours satisfies: α≤0.25%. For example, α may be 0.20%, 0.15%, 0.10%, or 0.05%.

In some examples, the dustproof material may be applicable to a wide temperature range. For example, in a temperature range from -30°C to 120°C, the energy storage modulus E of the dustproof material can satisfy: E≤150 kPa, and the viscosity η satisfies: η≥4000 mPa·s.

In some examples, a third plane in which the support 320 moves may be perpendicular to an optical axis O4O4 of the lens element 230. In a process in which the support 320 drives the lens element 330 to move in the fourth plane, a position of an incident point of light on the lens element 330 may change, so that a position at which imaging light is incident to the photosensitive component 340 can be adjusted to some extent, that is, an image stabilization function of the third camera module 300 is implemented.

FIG. 9 shows a fourth camera module 400 according to an embodiment of this application. The fourth camera module 400 may include a third fastening member 420, a third movable part 430, a lens element 440, and a photosensitive component 460. Light from a photographed object may be incident to the photosensitive component 460 after passing through the lens element 440, to form an image.

The fourth camera module 400 may further include an aperture 410. The aperture 410 may be disposed on a side that is of the lens element 440 and that is away from the photosensitive component 460. The aperture 410 may be configured to adjust a size of a light beam projected to the lens element 440.

The fourth camera module 400 may further include a filter 450. The filter 450 may be disposed between the lens element 440 and the photosensitive component 460, and may be disposed close to the photosensitive component 460. The filter 450 may filter out light of some wavelengths or frequencies in imaging light. For example, the filter 450 may be an infrared cutoff filter or a blue glass filter.

In some examples, the third movable part 430 may be configured to fasten the lens element 440. For example, the third movable part 430 may be a tubular structure with openings at two ends. It may be understood that FIG. 9 shows a cross section that is of the tubular third movable part 430 and that passes through an optical axis of the lens element. An inner wall of the third movable part 430 may be provided with grooves configured to clamp a periphery of the lens element 440. The lens element 440 may be mounted on the third movable part 430 through the grooves, so that the lens element 440 is relatively fastened to the third movable part 430. There may be one or more lens elements 440. This is not limited in this application.

The third movable part 430 may move in a first direction (an x-axis direction in FIG. 9). In some examples, the third fastening member 420 may be configured to limit a stroke of the third movable part 430 moving in the first direction.

In some examples, the third fastening member 420 may be similar to a housing structure with holes at two ends, and the third movable part 430 may be disposed inside the third fastening member 420, or the third fastening member 420 may be sleeved on an outer side of the third movable part 430. There may be a specific spacing between the third movable part 430 and the third fastening member 420, so that the third movable part 430 can move in the first direction in internal space of the third fastening member 420.

In a process in which the third movable part 430 moves in the first direction in the third fastening member 420, the third movable part 430 may collide with the third fastening member 420. During the collision of the two mechanical parts, some debris may be generated. The debris may be located on a path of imaging light propagation, and therefore may adversely affect imaging quality of the camera module.

In some examples, one or more protrusion-shaped stoppers may be disposed on the outer wall of the third movable part 430. In a movement process of the third movable part 430, these stoppers may be in contact with or collide with the inner wall of the third fastening member 420. For example, refer to FIG. 9. A fifth stopper 432 may be disposed on the outer wall of the third movable part 430, and a surface that is of the fifth stopper 432 and that faces the third fastening member 420 may be considered as a ninth collision surface 433. When the third movable part 430 collides with the third fastening member 420, the ninth collision surface 433 of the fifth stopper 432 is in contact with or collides with the inner wall of the third fastening member 420.

In some examples, one or more protrusion-shaped stoppers may be disposed on the inner wall of the third fastening member 420. In the movement process of the third movable part 430, these stoppers may be in contact with or collide with the outer wall of the third movable part 430. For example, refer to FIG. 9. A sixth stopper 422 may be disposed on the inner wall of the third fastening member 420, and a surface that is of the sixth stopper 422 and that faces the third movable part 430 may be considered as a tenth collision surface 423. When the third movable part 430 collides with the third fastening member 420, the tenth collision surface 423 of the sixth stopper 422 is in contact with or collides with the outer wall of the third movable part 430.

In some examples, the fifth stopper 432 described above may not be disposed on the outer wall of the third movable part 430. In other words, when the third movable part 430 is in contact with or collides with the third fastening member 420, a mutually continuous region on the outer wall of the third movable part 430 is in contact with or collides with the inner wall of the third fastening member 420, instead of the collision surface of the stopper on the outer wall of the third movable part 430 being in contact with or colliding with the inner wall of the third fastening member 420. In other words, for example, the first collision surface 131 in the first camera module 100 may be disposed on the outer wall of the third movable part 430. For example, refer to FIG. 9. An eleventh collision surface 431 may be disposed on the third movable part 430. When the third movable part 430 collides with the third fastening member 420, the eleventh collision surface 431 collides with the inner wall of the third fastening member 420.

In some examples, the sixth stopper 422 described above may not be disposed on the inner wall of the third fastening member 420. In other words, when the third movable part 430 is in contact with or collides with the third fastening member 420, a mutually continuous region on the inner wall of the third fastening member 420 is in contact with or collides with the outer wall of the third movable part 430, instead of the collision surface of the stopper on the inner wall of the third fastening member 420 being in contact with or colliding with the outer wall of the third movable part 430. In other words, for example, the second collision surface 131 in the first camera module 100 may be disposed on the inner wall of the third fastening member 420. For example, refer to FIG. 9. A twelfth collision surface 421 may be disposed on the third fastening member 420. When the third movable part 430 collides with the third fastening member 420, the twelfth collision surface 421 collides with the outer wall of the third movable part 430.

In some examples, the ninth collision surface 433 may correspond to the tenth collision surface 423. In other words, when the third movable part 430 collides with the third fastening member 420, the ninth collision surface 433 may collide with the tenth collision surface 423. In this case, a surface shape of the ninth collision surface 433 may match a surface shape of the tenth collision surface 423. For example, both the ninth collision surface 433 and the tenth collision surface 423 may be planes. For another example, the ninth collision surface 433 may be a concave surface, and the tenth collision surface 423 may be a convex surface that matches a shape of the concave surface. For another example, the ninth collision surface 433 may be a convex surface, and the tenth collision surface 423 may be a concave surface that matches a shape of the convex surface.

In some examples, the ninth collision surface 333 may correspond to the twelfth collision surface 421. In other words, when the third movable part 430 collides with the third fastening member 420, the ninth collision surface 433 may collide with the twelfth collision surface 421. In this case, a surface shape of the ninth collision surface 433 may match a surface shape of the twelfth collision surface 421. For example, both the ninth collision surface 333 and the twelfth collision surface 421 may be planes. For another example, the ninth collision surface 433 may be a concave surface, and the twelfth collision surface 421 may be a convex surface that matches a shape of the concave surface. For another example, the ninth collision surface 333 may be a convex surface, and the twelfth collision surface 421 may be a concave surface that matches a shape of the convex surface.

In some examples, the eleventh collision surface 431 may correspond to the sixth collision surface. In other words, when the third movable part 430 collides with the third fastening member 420, the eleventh collision surface 431 may collide with the sixth collision surface. In this case, a surface shape of the eleventh collision surface 431 may match a surface shape of the sixth collision surface. For example, both the eleventh collision surface 431 and the sixth collision surface may be planes. For another example, the eleventh collision surface 431 may be a concave surface, and the eleventh collision surface 431 may be a convex surface that matches a shape of the concave surface. For another example, the eleventh collision surface 431 may be a convex surface, and the sixth collision surface may be a concave surface that matches a shape of the convex surface.

In some examples, the eleventh collision surface 431 may correspond to the twelfth collision surface 421. In other words, when the third movable part 430 collides with the third fastening member 420, the eleventh collision surface 431 may collide with the eighth collision surface. In this case, a surface shape of the eleventh collision surface 431 may match a surface shape of the twelfth collision surface 421. For example, both the eleventh collision surface 431 and the twelfth collision surface 421 may be planes. For another example, the eleventh collision surface 431 may be a concave surface, and the twelfth collision surface 421 may be a convex surface that matches a shape of the concave surface. For another example, the eleventh collision surface 431 may be a convex surface, and the twelfth collision surface 421 may be a concave surface that matches a shape of the convex surface.

In this application, a size, a quantity, a shape, distribution, a mutual relationship, or the like of collision surfaces on which the third movable part 430 is in contact with or collides with the third fastening member 420 is not limited. The foregoing descriptions of the ninth collision surface 433, the tenth collision surface 423, and the like are merely examples, and should not be construed as a limitation on this application.

To reduce a probability of dust generation caused by the collision between the third movable part 430 and the third fastening member 420, in some examples, the collision surface of the third movable part 430 and/or the third fastening member 420 may be coated with a specific amount of dustproof materials.

For example, the ninth collision surface 433 may be coated with the dustproof material, or the tenth collision surface 423 may be coated with the dustproof material, or both the ninth collision surface 433 and the tenth collision surface 423 may be coated with the dustproof material.

For example, the eleventh collision surface 431 may be coated with the dustproof material, or the twelfth collision surface 421 may be coated with the dustproof material, or both the eleventh collision surface 431 and the twelfth collision surface 421 may be coated with the dustproof material.

The dustproof material may be one or more of the following: an oil-based material, a lipid-based material, or a soft rubber-like material. The oil-based material may be mineral oil, synthetic oil, animal or vegetable oil, water-based liquid, or the like. The lipid-based material may be a soap-based lipid, a hydrocarbon-based lipid, an inorganic lipid, an organic lipid, or the like. The soft rubber-like material may be silicone, thermoplastic elastomer, thermoplastic polyurethane elastomer rubber chloride, rubber, or the like.

The dustproof material may include a material with good high-temperature resistance, low-temperature stability, oxidation resistance, hydrophobicity, electrical insulation, and the like.

In some examples, the dustproof material may include one or more of the following materials: a fluorine-containing organic compound, a silicon-containing organic compound, or a hydrocarbon organic compound. In other words, the dustproof material may include only any one of the fluorine-containing organic compound, the silicon-containing organic compound, or the hydrocarbon organic compound, or the dustproof material may include two or three types of organic compounds in the fluorine-containing organic compound, the silicon-containing organic compound, or the hydrocarbon organic compound.

When the dustproof material includes a plurality of types of organic compounds of the foregoing three types of organic compounds, component content of different types of organic compounds in the dustproof material is not limited in this application.

In some examples, a main composition of the dustproof material may include one or more of functional groups: -CF-, -CF₂-, or -CF₃.

For example, the composition of the dustproof material including the foregoing functional group may be one or more of the following: fluorocarbon, fluoroether, fluoroalcohol, fluoroketone, or fluorocarboxylic acid. For example, the dustproof material may include fluorinated oil and/or fluorinated resin.

In some scenarios, the fluorocarbon may also be referred to as a fluorinated carbon-based organic compound. For example, the fluorocarbon may be fluoroalkane, fluoroolefin, or fluoroalkyne, for example, carbon tetrafluoride, tetrafluoroethylene, or hexafluoropropylene.

In some scenarios, the fluoroether may also be referred to as a fluorinated ether-based organic compound. For example, the fluoroether may be perfluoroethyl ether, difluoroethyl ether, or trifluoroethyl ether.

For example, the fluoroalcohol may be trifluoromethanol, perfluoro ethanol, or perfluoro propanol. The fluoroketone may be perfluoroacetone, difluorohexanone, trifluoromethyl ketone, or the like. The fluorocarboxylic acid may be difluoroacetic acid, trifluoromethylpropionic acid, heptafluorodecic acid, or the like.

For example, in this application, functional groups and chemical bonds of a component of the dustproof material may be determined through a Fourier transform infrared spectroscopy (Fourier transform infrared spectroscopy, FTIR) test. An FTIR may be used to test an absorption characteristic of a to-be-tested sample for infrared light to analyze types of a chemical functional group and a chemical bond included in a compound molecule included in the to-be-tested sample. In an FTIR spectrum, a horizontal coordinate usually indicates a wave number (cm⁻¹), and indicates a frequency of infrared radiation. A vertical coordinate indicates a transmittance, an absorbance, a reflectivity, or the like, and reflects an absorption degree of the to-be-tested sample for infrared light of a specific wavelength.

For example, an FTIR test is performed on the dustproof material. If an absorption peak may be detected near a wave number of 1240 cm⁻¹, it may indicate that a functional group -CF-exists in the component of the dustproof material. If an absorption peak may be detected near a wave number of 1190 cm⁻¹, it may indicate that a functional group -CF₂- exists in the component of the dustproof material. If an absorption peak may be detected near a wave number of 1306 cm⁻¹, it may indicate that a functional group -CF₃ exists in the component of the dustproof material.

A test result of the FTIR may further indicate that the component of the dustproof material includes a carbon element and a fluorine element. Based on the test result of the FTIR, it may be determined that the component of the dustproof material may be a fluorinated carbon-based organic compound. For example, the component of the dustproof material may be polytetrafluoroethylene (C₂F₄)n.

It should be understood that the dustproof material in the foregoing composition may further include more functional groups or chemical bonds, for example, -C-C-. This is not limited in this application.

For example, an FTIR test is performed on the dustproof material. If an absorption peak may be detected near a wave number of 990 cm⁻¹, and the absorption peak is sharp and has high intensity, it may indicate that a functional group -C-O-C- exists in the component of the dustproof material. In addition, if an absorption peak may be detected near a wave number of 1240 cm⁻¹ in a test result of the FTIR, it may indicate that a functional group -CF- further exists in the component of the dustproof material. If an absorption peak may be detected near a wave number of 1190 cm⁻¹, it may indicate that a functional group -CF₂- further exists in the component of the dustproof material. If an absorption peak may be detected near a wave number of 1306 cm⁻¹, it may indicate that a functional group -CF₃ further exists in the component of the dustproof material.

The test result of the FTIR may further indicate that the component of the dustproof material includes a carbon element, a fluorine element, and an oxygen element. Based on the test result of the FTIR, it may be determined that the component of the dustproof material may be a fluorinated ether-based organic compound (fluoroether). For example, the component of the dustproof material may be perfluoropolyether (CF₃O[-CF(CF₃)CF₂O-]ₓ(-CF₂O-)yCF₃), perfluoroethyl ether, or difluoroethyl ether.

It should be understood that the dustproof material in the foregoing composition may further include more functional groups or chemical bonds, for example, -C-C-. This is not limited in this application.

In some examples, a main component of the dustproof material may include a functional group -Si-O-, and the main component of the dustproof material may further include one or more of the following functional groups: -CH₃, -CH₂-, or -CH-.

For example, a composition of the dustproof material including the foregoing functional group may be a silicon-containing organic compound. For example, the silicon-containing organic compound may be one or more of the following: silane, silanol, or organosiloxane.

For example, the silane may be methyl silane or dimethyl silane, and the silanol may be trimethyl silanol or triethoxy silanol.

For example, the organosiloxane may be dimethylsiloxane, polydimethylsiloxane (C₂H₆OSi)n, vinyl siloxane, or silicone resin.

Similarly, in this application, functional groups and chemical bonds of a component of the dustproof material may be determined through an FTIR test.

An FTIR test is performed on the dustproof material. If an absorption peak may be detected near a wave number of 1092 cm⁻¹, it may indicate that the component of the dustproof material includes a -Si-O- chemical bond. If an absorption peak may be detected in a wave number range of 3000 cm⁻¹ to 2840 cm⁻¹, it may indicate that the component of the dustproof material further includes one or more of the following functional groups: -CH₃, -CH₂-, or -CH-.

A test result of the FTIR may further indicate that the component of the dustproof material includes a carbon element, a silicon element, and an oxygen element. Based on the test result of the FTIR, it may be determined that the component of the dustproof material may include organosiloxane. For example, the component of the dustproof material may include polyorganosiloxane or silicone resin.

It should be understood that the dustproof material in the foregoing composition may further include more functional groups or chemical bonds, for example, -Si-C-. This is not limited in this application.

In some examples, a main component of the dustproof material may include only one or more of the functional groups: -CH₃, -CH₂-, or -CH-.

For example, the dustproof material may mainly include a hydrocarbon organic compound, and the hydrocarbon organic compound may be one or more of alkane, olefin, aromatic hydrocarbon, or the like.

For example, the alkane may include straight-chain alkane or cycloalkane, for example, straight-chain alkane or cycloalkane including 15 to 40 carbon atoms. The aromatic hydrocarbon may include low-molecular-weight polycyclic aromatic hydrocarbon or the like.

For example, the olefin may include polyalpha olefin (polyalpha olefin, PAO). Herein, the polyalpha olefin is an organic compound obtained through a polymerization reaction and the like of alpha olefin. The alpha olefin is a type of monoolefin that has one double bond located at a molecular chain end (that is, at a first carbon atom). Common alpha olefin includes ethylene, propylene, 1-butene, 1-hexene, and the like.

Similarly, in this application, functional groups and chemical bonds of a component of the dustproof material may be determined through an FTIR test.

An FTIR test is performed on the dustproof material. If absorption peaks are detected near wave numbers of 2960 cm⁻¹, 2870 cm⁻¹, and 1380 cm⁻¹, it may be determined that the component of the dustproof material may include a functional group -CH₃. If absorption peaks may be detected near wave numbers of 2930 cm⁻¹ and 2850 cm⁻¹, it may be determined that the component of the dustproof material may include a functional group -CH₂-. If an absorption peak may be detected near a wave number of 1460 cm⁻¹, it may be determined that the component of the dustproof material may include an alkyl. If an absorption peak is detected near a wave number of 722 cm⁻¹, it may be determined that the component of the dustproof material may include alkane with a plurality of carbon atoms.

A test result of the FTIR may further indicate that the component of the dustproof material includes a carbon element and a hydrogen element. Based on the test result of the FTIR, it may be determined that the component of the dustproof material may include one or more of the functional groups: -CH₃, -CH₂-, or -CH-. For example, the component of the dustproof material may include the polyalpha olefin.

In some examples, the dustproof material may include a plurality of types of organic compounds in the fluorine-containing organic compound, the silicon-containing organic compound, or the hydrocarbon organic compound, or in other words, the dustproof material may be a mixture including a plurality of types of organic compounds in the fluorine-containing organic compound, the silicon-containing organic compound, or the hydrocarbon organic compound. An FTIR test is performed on a plurality of different types of materials, and a detection result may reflect characteristic peaks of different functional groups in the different types of materials.

For example, the dustproof material may include one or more of the following: the fluorinated carbon-based organic compound, the fluorinated ether-based organic compound, the organosiloxane, or the polyalpha olefin.

For example, for an FTIR test on a dustproof material including the fluorinated carbon-based organic compound and the fluorinated ether-based organic compound, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and organopolysiloxane, characteristic peaks reflecting stretching vibration of the functional group -Si-O- and one or more of the functional groups: -CF-, -CF₂-, or -CF₃ may be detected.

For example, for an FTIR test on a dustproof material including the fluorinated ether-based organic compound and the organopolysiloxane, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and the polyalpha olefin, characteristic peaks reflecting stretching vibration of one or more of the functional groups: -CF-, -CF₂-, or -CF₃ and one or more of the functional groups: -CH₃, -CH₂-, or -CH- may be detected.

For example, for an FTIR test on a dustproof material including the fluorinated ether-based organic compound and the polyalpha olefin, characteristic peaks reflecting stretching vibration of the functional group -C-O-C- and one or more of the functional groups: -CH₃, -CH₂-, or -CH- may be detected.

It should be noted that, performing component detection on the dustproof material through the FTIR is merely a test method for determining the component of the dustproof material, and should not be considered as a limitation on the component of the dustproof material. There are further a plurality of methods for determining the component of the dustproof material, for example, a nuclear magnetic resonance test and a Raman spectroscopy test. This is not limited in this application.

It should be further noted that the test result of the FTIR is affected by a plurality of factors such as an environment factor, a sample factor, and an operation method. Errors introduced by these factors may cause a deviation of the test result to some extent. In other words, a position of the characteristic peak reflected by the component of the dustproof material in the test result of the FTIR is merely an example for description. An actual position of the characteristic peak may have a deviation from a position of the characteristic peak provided in this application. The position of the characteristic peak in the foregoing example should not be considered as a limitation on this application. In some examples, the dustproof material may be a material in a liquid state at a normal temperature. The dustproof material in a liquid state is easy to be coated on the collision surface of the camera module, which helps simplify a processing and production process of the camera module. For example, an energy storage modulus E of the dustproof material at 25°C satisfies: E≤50 kPa. For example, E of the dustproof material at 25°C may be 40 kPa, 30 kPa, 20 kPa, or 10 kPa.

In an actual manufacturing and production process, the dustproof material in a liquid state may be sprayed at a plurality of points on different regions of the collision surface based on an area of the collision surface, and then the dustproof material with fluidity is made to flow and cover the collision surface through vibration.

In some examples, the dustproof material has specific adhesion, so that debris, dust, or the like in the camera module can be adhered to the dustproof material. For example, a viscosity η of the dustproof material at 25°C satisfies: η≥5000 mPa·s. For example, the viscosity η of the dustproof material at 25°C may be 10000 mPa·s, 15000 mPa·s, 20000 mPa·s, or 25000 mPa·s.

To improve stability of the dustproof material and improve focus adjustment and focusing performance and imaging quality stability in a use process of the camera module, in some examples, the dustproof material may have a specific high-temperature resistance characteristic or specific heat resistance stability.

For example, a mass evaporation loss α of the dustproof material at 200°C for 24 hours satisfies: α≤0.25%. For example, α may be 0.20%, 0.15%, 0.10%, or 0.05%.

In some examples, the dustproof material may be applicable to a wide temperature range. For example, in a temperature range from -30°C to 120°C, the energy storage modulus E of the dustproof material can satisfy: E≤150 kPa, and the viscosity η satisfies: η≥4000 mPa·s.

In some examples, the first direction in which the third movable part 430 moves may be parallel to an optical axis O3O3 of the lens element 440. In a process in which the third movable part 430 drives the lens element 440 to move in the first direction, a distance between the lens element 440 and the photosensitive component 460 and a distance between the lens element 440 and the photographed object may both change, so that an image distance and an object distance of the camera module can be adjusted to some extent, that is, functions such as an autofocus function and a focus adjustment function of the fourth camera module 400 can be implemented.

In some examples, the fourth camera module 400 may further include an accommodating member. The accommodating member may be configured to accommodate the foregoing photosensitive component 460, and an end face of an end that is of the accommodating member and that is close to the lens element 440 may also be coated with the dustproof material.

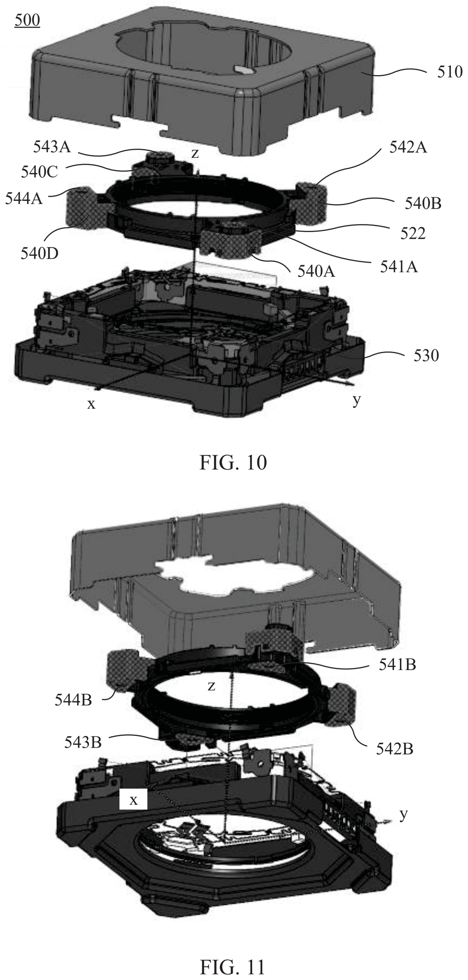

FIG. 10 and FIG. 11 are diagrams of a structure of a fifth lens module 500 according to an embodiment of this application. The fifth camera module 500 may include a lens cover 510, a lens element holder 520, a lens element (not shown in the figure), a lens base 530, and a photosensitive component (not shown in the figure). The lens base 530 may be configured to accommodate the lens element holder 520 and the photosensitive component, the lens element holder 520 may be configured to fasten the lens element, and the lens cover 510 may cover an outer side of the lens base 530. Light from a photographed object may be incident to the photosensitive component after passing through the lens element, to form an image.

Refer to FIG. 10. The lens element holder 520 may include a body 522 and a stopper 540. The stopper 540 may be disposed around a periphery of the body 522. The body 522 may be configured to accommodate the lens element of the fifth lens module 500.

In some examples, four stoppers may be disposed on a periphery of the lens element holder 520, for example, respectively referred to as a stopper 540A, a stopper 540B, a stopper 540C, and a stopper 540D. The stopper 540A is disposed adjacent to the stopper 540B and the stopper 540D, and is disposed diagonally to the stopper 540C. The four stoppers may be understood as four independent island block structures formed by extending the main structure of the lens element holder 520 to the periphery.

In some examples, two end faces that are of the four stoppers and that are disposed opposite to each other in a z-axis direction are located outside two end faces that are of the body 522 of the lens element holder 520 and that are disposed opposite to each other in the z-axis direction. For example, the stopper 540A may include an end face 541A and an end face 541B that are disposed opposite to each other in a z-axis, the stopper 540B may include an end face 542A and an end face 542B that are disposed opposite to each other in the z-axis, the stopper 540C may include an end face 543A and an end face 543B that are disposed opposite to each other in the z-axis, and the stopper 540D may include an end face 544A and an end face 544B that are disposed opposite to each other in the z-axis. The end face 541A, the end face 542A, the end face 543A, and the end face 544A are located above the end face 541B, the end face 542B, the end face 543B, and the end face 544B. In other words, the end face 541A, the end face 542A, the end face 543A, and the end face 544A may be disposed close to the lens cover 510, and the end face 541B, the end face 542B, the end face 543B, and the end face 544B may be disposed close to the lens base 530. In a possible case, the end face 541A, the end face 542A, the end face 543A, and the end face 544A may be located in a same plane, and the end face 541B, the end face 542B, the end face 543B, and the end face 544B may be located in a same plane.

The stopper 540A may further include a first end face and a second end face. The first end face and the second end face are disposed adjacent to each other, and both the first end face and the second end face are adjacent to the end face 541A and the end face 541B. For example, the first end face may be parallel to an x-z plane in FIG. 10, and the second end face may be parallel to a y-z plane in FIG. 10.

Similarly, the stopper 540B may further include a third end face and a fourth end face. The third end face and the fourth end face are disposed adjacent to each other, and both the third end face and the fourth end face are adjacent to the end face 542A and the end face 542B. The third end face may be parallel to the x-z plane in FIG. 10, and the fourth end face may be parallel to the y-z plane in FIG. 10. The stopper 540C may further include a fifth end face and a sixth end face. The fifth end face and the sixth end face are disposed adjacent to each other, and both the fifth end face and the sixth end face are adjacent to the end face 543A and the end face 543B. The fifth end face may be parallel to the x-z plane in FIG. 10, and the sixth end face may be parallel to the y-z plane in FIG. 10. The stopper 540D may further include a seventh end face and an eighth end face. The seventh end face and the eighth end face are disposed adjacent to each other, and both the seventh end face and the eighth end face are adjacent to the end face 544A and the end face 544B. The seventh end face may be parallel to the x-z plane in FIG. 10, and the eighth end face may be parallel to the y-z plane in FIG. 10.

In some examples, the lens element holder 520 may move in a third plane (an x-y plane in FIG. 10), to adjust a position of an incident point of incident light on the lens element. This implements an image stabilization function of a camera module. The lens element holder 520 may also move in a second direction (the z-axis direction in FIG. 10), to adjust an object distance and an image distance of the camera module. This implements an autofocus function or a focus adjustment function of the camera module.

When the lens element holder 520 approaches the lens cover 510 in the second direction, the lens element holder 520 may be in contact with or collide with the lens cover 510. In this case, the end face 541A, the end face 542A, the end face 543A, and the end face 544A of the foregoing four stoppers (the stopper 540A, the stopper 540B, the stopper 540C, and the stopper 540D) may be in contact with or collide with an inner wall of the lens cover 510. When the lens element holder 520 approaches the lens base 530 in the second direction, the lens element holder 520 may be in contact with or collide with the lens base 530. In this case, the end face 541B, the end face 542B, the end face 543B, and the end face 544B of the foregoing four stoppers (the stopper 540A, the stopper 540B, the stopper 540C, and the stopper 540D) may be in contact with or collide with an outer wall of the lens base 530.

When the lens element holder 520 approaches the lens cover 510 in a y-axis direction in FIG. 10, the lens element holder 520 may be in contact with or collide with the lens cover 510. In this case, of the foregoing four stoppers (the stopper 540A, the stopper 540B, the stopper 540C, and the stopper 540D), the first end face and the third end face may be in contact with or collide with the inner wall of the lens cover 510, or the fifth end face and the seventh end face may be in contact with or collide with the inner wall of the lens cover 510.

When the lens element holder 520 approaches the lens cover 510 in the x-axis direction in FIG. 10, the lens element holder 520 may be in contact with or collide with the lens cover 510. In this case, of the foregoing four stoppers (the stopper 540A, the stopper 540B, the stopper 540C, and the stopper 540D), the second end face and the eighth end face may be in contact with or collide with the inner wall of the lens cover 510, or the fourth end face and the sixth end face may be in contact with or collide with the inner wall of the lens cover 510.

A plurality of end faces of the four stoppers disposed on the lens element holder 520 may be coated with a dustproof material, to reduce adverse impact of debris generated in a process in which the lens element holder 520 collides with the lens cover 510 or the lens base 530 on imaging quality of the camera module.

The dustproof material may be one or more of the following: an oil-based material, a lipid-based material, or a soft rubber-like material. The oil-based material may be mineral oil, synthetic oil, animal or vegetable oil, water-based liquid, or the like. The lipid-based material may be a soap-based lipid, a hydrocarbon-based lipid, an inorganic lipid, an organic lipid, or the like. The soft rubber-like material may be silicone, thermoplastic elastomer, thermoplastic polyurethane elastomer rubber chloride, rubber, or the like.

The dustproof material may include a material with good high-temperature resistance, low-temperature stability, oxidation resistance, hydrophobicity, electrical insulation, and the like.

In some examples, the dustproof material may include one or more of the following materials: a fluorine-containing organic compound, a silicon-containing organic compound, or a hydrocarbon organic compound. In other words, the dustproof material may include only any one of the fluorine-containing organic compound, the silicon-containing organic compound, or the hydrocarbon organic compound, or the dustproof material may include two or three types of organic compounds in the fluorine-containing organic compound, the silicon-containing organic compound, or the hydrocarbon organic compound.

When the dustproof material includes a plurality of types of organic compounds of the foregoing three types of organic compounds, component content of different types of organic compounds in the dustproof material is not limited in this application.

In some examples, a main composition of the dustproof material may include one or more of functional groups: -CF-, -CF₂-, or -CF₃.

For example, the composition of the dustproof material including the foregoing functional group may be one or more of the following: fluorocarbon, fluoroether, fluoroalcohol, fluoroketone, or fluorocarboxylic acid. For example, the dustproof material may include fluorinated oil and/or fluorinated resin.

In some scenarios, the fluorocarbon may also be referred to as a fluorinated carbon-based organic compound. For example, the fluorocarbon may be fluoroalkane, fluoroolefin, or fluoroalkyne, for example, carbon tetrafluoride, tetrafluoroethylene, or hexafluoropropylene.

In some scenarios, the fluoroether may also be referred to as a fluorinated ether-based organic compound. For example, the fluoroether may be perfluoroethyl ether, difluoroethyl ether, or trifluoroethyl ether.

For example, the fluoroalcohol may be trifluoromethanol, perfluoro ethanol, or perfluoro propanol. The fluoroketone may be perfluoroacetone, difluorohexanone, trifluoromethyl ketone, or the like. The fluorocarboxylic acid may be difluoroacetic acid, trifluoromethylpropionic acid, heptafluorodecic acid, or the like.

For example, in this application, functional groups and chemical bonds of a component of the dustproof material may be determined through a Fourier transform infrared spectroscopy (Fourier transform infrared spectroscopy, FTIR) test. An FTIR may be used to test an absorption characteristic of a to-be-tested sample for infrared light to analyze types of a chemical functional group and a chemical bond included in a compound molecule included in the to-be-tested sample. In an FTIR spectrum, a horizontal coordinate usually indicates a wave number (cm⁻¹), and indicates a frequency of infrared radiation. A vertical coordinate indicates a transmittance, an absorbance, a reflectivity, or the like, and reflects an absorption degree of the to-be-tested sample for infrared light of a specific wavelength.

For example, an FTIR test is performed on the dustproof material. If an absorption peak may be detected near a wave number of 1240 cm^{- 1}, it may indicate that a functional group -CF-exists in the component of the dustproof material. If an absorption peak may be detected near a wave number of 1190 cm⁻¹, it may indicate that a functional group -CF₂- exists in the component of the dustproof material. If an absorption peak may be detected near a wave number of 1306 cm⁻¹, it may indicate that a functional group -CF₃ exists in the component of the dustproof material.

A test result of the FTIR may further indicate that the component of the dustproof material includes a carbon element and a fluorine element. Based on the test result of the FTIR, it may be determined that the component of the dustproof material may be a fluorinated carbon-based organic compound. For example, the component of the dustproof material may be polytetrafluoroethylene (C₂F₄)n.

It should be understood that the dustproof material in the foregoing composition may further include more functional groups or chemical bonds, for example, -C-C-. This is not limited in this application.

For example, an FTIR test is performed on the dustproof material. If an absorption peak may be detected near a wave number of 990 cm⁻¹, and the absorption peak is sharp and has high intensity, it may indicate that a functional group -C-O-C- exists in the component of the dustproof material. In addition, if an absorption peak may be detected near a wave number of 1240 cm⁻¹ in a test result of the FTIR, it may indicate that a functional group -CF- further exists in the component of the dustproof material. If an absorption peak may be detected near a wave number of 1190 cm⁻¹, it may indicate that a functional group -CF₂- further exists in the component of the dustproof material. If an absorption peak may be detected near a wave number of 1306 cm⁻¹, it may indicate that a functional group -CF₃ further exists in the component of the dustproof material.

The test result of the FTIR may further indicate that the component of the dustproof material includes a carbon element, a fluorine element, and an oxygen element. Based on the test result of the FTIR, it may be determined that the component of the dustproof material may be a fluorinated ether-based organic compound (fluoroether). For example, the component of the dustproof material may be perfluoropolyether (CF₃O[-CF(CF₃)CF₂O-]ₓ(-CF₂O-)yCF₃), perfluoroethyl ether, or difluoroethyl ether.

It should be understood that the dustproof material in the foregoing composition may further include more functional groups or chemical bonds, for example, -C-C-. This is not limited in this application.

In some examples, a main component of the dustproof material may include a functional group -Si-O-, and the main component of the dustproof material may further include one or more of the following functional groups: -CH₃, -CH₂-, or -CH-.

For example, a composition of the dustproof material including the foregoing functional group may be a silicon-containing organic compound. For example, the silicon-containing organic compound may be one or more of the following: silane, silanol, or organosiloxane.

For example, the silane may be methyl silane or dimethyl silane, and the silanol may be trimethyl silanol or triethoxy silanol.

For example, the organosiloxane may be dimethylsiloxane, polydimethylsiloxane (C₂H₆OSi)n, vinyl siloxane, or silicone resin.

Similarly, in this application, functional groups and chemical bonds of a component of the dustproof material may be determined through an FTIR test.

An FTIR test is performed on the dustproof material. If an absorption peak may be detected near a wave number of 1092 cm⁻¹, it may indicate that the component of the dustproof material includes a -Si-O- chemical bond. If an absorption peak may be detected in a wave number range of 3000 cm⁻¹ to 2840 cm⁻¹, it may indicate that the component of the dustproof material further includes one or more of the following functional groups: -CH₃, -CH₂-, or -CH-.

A test result of the FTIR may further indicate that the component of the dustproof material includes a carbon element, a silicon element, and an oxygen element. Based on the test result of the FTIR, it may be determined that the component of the dustproof material may include organosiloxane. For example, the component of the dustproof material may include polyorganosiloxane or silicone resin.

It should be understood that the dustproof material in the foregoing composition may further include more functional groups or chemical bonds, for example, -Si-C-. This is not limited in this application.

In some examples, a main component of the dustproof material may include only one or more of the functional groups: -CH₃, -CH₂-, or -CH-.

For example, the dustproof material may mainly include a hydrocarbon organic compound, and the hydrocarbon organic compound may be one or more of alkane, olefin, aromatic hydrocarbon, or the like.

For example, the alkane may include straight-chain alkane or cycloalkane, for example, straight-chain alkane or cycloalkane including 15 to 40 carbon atoms. The aromatic hydrocarbon may include low-molecular-weight polycyclic aromatic hydrocarbon or the like.

For example, the olefin may include polyalpha olefin (polyalpha olefin, PAO). Herein, the polyalpha olefin is an organic compound obtained through a polymerization reaction and the like of alpha olefin. The alpha olefin is a type of monoolefin that has one double bond located at a molecular chain end (that is, at a first carbon atom). Common alpha olefin includes ethylene, propylene, 1-butene, 1-hexene, and the like.

Similarly, in this application, functional groups and chemical bonds of a component of the dustproof material may be determined through an FTIR test.

An FTIR test is performed on the dustproof material. If absorption peaks are detected near wave numbers of 2960 cm⁻¹, 2870 cm⁻¹, and 1380 cm⁻¹, it may be determined that the component of the dustproof material may include a functional group -CH₃. If absorption peaks may be detected near wave numbers of 2930 cm⁻¹ and 2850 cm⁻¹, it may be determined that the component of the dustproof material may include a functional group -CH₂-. If an absorption peak may be detected near a wave number of 1460 cm⁻¹, it may be determined that the component of the dustproof material may include an alkyl. If an absorption peak is detected near a wave number of 722 cm⁻¹, it may be determined that the component of the dustproof material may include alkane with a plurality of carbon atoms.

A test result of the FTIR may further indicate that the component of the dustproof material includes a carbon element and a hydrogen element. Based on the test result of the FTIR, it may be determined that the component of the dustproof material may include one or more of the functional groups: -CH₃, -CH₂-, or -CH-. For example, the component of the dustproof material may include the polyalpha olefin.

In some examples, the dustproof material may include a plurality of types of organic compounds in the fluorine-containing organic compound, the silicon-containing organic compound, or the hydrocarbon organic compound, or in other words, the dustproof material may be a mixture including a plurality of types of organic compounds in the fluorine-containing organic compound, the silicon-containing organic compound, or the hydrocarbon organic compound. An FTIR test is performed on a plurality of different types of materials, and a detection result may reflect characteristic peaks of different functional groups in the different types of materials.

For example, the dustproof material may include one or more of the following: the fluorinated carbon-based organic compound, the fluorinated ether-based organic compound, the organosiloxane, or the polyalpha olefin.

For example, for an FTIR test on a dustproof material including the fluorinated carbon-based organic compound and the fluorinated ether-based organic compound, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and organopolysiloxane, characteristic peaks reflecting stretching vibration of the functional group -Si-O- and one or more of the functional groups: -CF-, -CF₂-, or -CF₃ may be detected.

For example, for an FTIR test on a dustproof material including the fluorinated ether-based organic compound and the organopolysiloxane, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and the polyalpha olefin, characteristic peaks reflecting stretching vibration of one or more of the functional groups: -CF-, -CF₂-, or -CF₃ and one or more of the functional groups: -CH₃, -CH₂-, or -CH- may be detected.

For example, for an FTIR test on a dustproof material including the fluorinated ether-based organic compound and the polyalpha olefin, characteristic peaks reflecting stretching vibration of the functional group -C-O-C- and one or more of the functional groups: -CH₃, -CH₂-, or -CH- may be detected.

It should be noted that, performing component detection on the dustproof material through the FTIR is merely a test method for determining the component of the dustproof material, and should not be considered as a limitation on the component of the dustproof material. There are further a plurality of methods for determining the component of the dustproof material, for example, a nuclear magnetic resonance test and a Raman spectroscopy test. This is not limited in this application.

It should be further noted that the test result of the FTIR is affected by a plurality of factors such as an environment factor, a sample factor, and an operation method. Errors introduced by these factors may cause a deviation of the test result to some extent. In other words, a position of the characteristic peak reflected by the component of the dustproof material in the test result of the FTIR is merely an example for description. An actual position of the characteristic peak may have a deviation from a position of the characteristic peak provided in this application. The position of the characteristic peak in the foregoing example should not be considered as a limitation on this application. In some examples, the dustproof material may be a material in a liquid state at a normal temperature. The dustproof material in a liquid state is easy to be coated on the collision surface of the camera module, which helps simplify a processing and production process of the camera module. For example, an energy storage modulus E of the dustproof material at 25°C satisfies: E≤50 kPa. For example, E of the dustproof material at 25°C may be 40 kPa, 30 kPa, 20 kPa, or 10 kPa.

In an actual manufacturing and production process, the dustproof material in a liquid state may be sprayed at a plurality of points on different regions of the collision surface based on an area of the collision surface, and then the dustproof material with fluidity is made to flow and cover the collision surface through vibration.

In some examples, the dustproof material has specific adhesion, so that debris, dust, or the like in the camera module can be adhered to the dustproof material. For example, a viscosity η of the dustproof material at 25°C satisfies: η≥5000 mPa·s. For example, the viscosity η of the dustproof material at 25°C may be 10000 mPa·s, 15000 mPa·s, 20000 mPa·s, or 25000 mPa·s.

To improve stability of the dustproof material and improve image stabilization performance and imaging quality stability in a use process of the camera module, in some examples, the dustproof material may have a specific high-temperature resistance characteristic or specific heat resistance stability.

For example, a mass evaporation loss α of the dustproof material at 200°C for 24 hours satisfies: α≤0.25%. For example, α may be 0.20%, 0.15%, 0.10%, or 0.05%.

In some examples, the dustproof material may be applicable to a wide temperature range. For example, in a temperature range from -30°C to 120°C, the energy storage modulus E of the dustproof material can satisfy: E≤150 kPa, and the viscosity η satisfies: η≥5000 mPa·s.

In some examples, collision surfaces corresponding to collision surfaces on the lens element holder 520 may further be disposed on the lens cover 510 and the lens base 530. One or more of these collision surfaces may also be coated with the foregoing dustproof material.

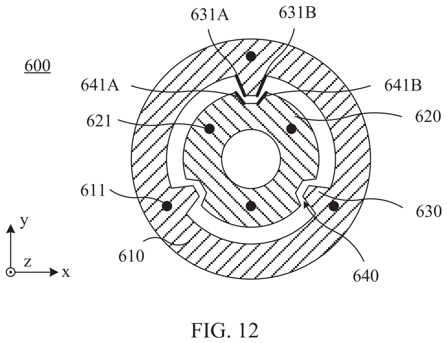

FIG. 12 is a diagram of a partial structure of a variable aperture assembly 600 according to an embodiment of this application. The variable aperture assembly 600 may be the aperture 110, the aperture 210, the aperture 350, the aperture 410, or the like. In other words, the variable aperture assembly 600 may be mounted in the first camera module 100, the second camera module 200, the third camera module 300, or the like. The variable aperture assembly 600 may include a blade (not shown in the figure), a blade holder 620, and a drive component 610.

In some examples, the blade holder 620 may be of an annular structure, and a plurality of fastening structures may be disposed on an end face of the blade holder 620, and the plurality of fastening structures may correspond to the blades included in the variable aperture assembly 600. The fastening structure may be configured to implement a fixed connection between the blade and the blade holder 620. For example, the fastening structures may be cylindrical first protrusions 621 disposed on the end face of the blade holder 620. The blades may be provided with round holes whose sizes correspond to sizes of these cylindrical protrusions, and the blades may be sleeved on the first protrusions 621 through these round holes.

In some examples, the drive component 610 may be a ring-shaped structure sleeved on a periphery of the blade holder 620, and the drive component 610 may rotate around a z-axis shown in FIG. 12. In a possible implementation, ends that are of the plurality of blades and that are away from the round holes may be further provided with groove-shaped through holes, and an end face of an end that is of the drive component 610 and that is close to the blades may be further provided with a plurality of cylindrical second protrusions 611. A diameter of the second protrusion 611 may correspond to a width of the groove-shaped through hole on the blade. In this way, the groove-shaped through hole on the blade may be sleeved on the second protrusion 611.

In a process in which the drive component 610 rotates around the z-axis, the blades may rotate around the first protrusion 621 on the blade holder 620 along the groove-shaped through holes on the blades, and the plurality of blades overlap with each other. In a rotation process of the blades, a size of a light transmission hole formed by the plurality of blades may change, so that a function of adjusting an amount of light entering the camera module by the variable aperture assembly 600 can be implemented.

To control an angle of rotation of the drive component 610 around the z-axis, in some examples, one or more protrusions 630 may be disposed on an inner sidewall of the drive component 610, and an outer sidewall of the blade holder 620 may be provided with grooves 640 corresponding to the protrusions 630. Quantities, positions, and sizes of the protrusions 630 and the grooves 640 may match each other, so that the protrusions 630 may extend into the grooves 640.

In a process in which the drive component 610 and the blade holder 620 rotate relative to each other, a side wall of the protrusion 630 may be in contact with or collide with a side wall of the groove 640. In some examples, a collision surface 631A and a collision surface 631B may be disposed on the protrusion 630, and the collision surface 631A and the collision surface 631B are disposed opposite to each other. A collision surface 641A and a collision surface 641B that are disposed opposite to each other may be disposed in the groove 640. For example, when the drive component 610 rotates clockwise around the z-axis, the collision surface 631B may be in contact with or collide with the collision surface 641B. For example, when the drive component 610 rotates counterclockwise around the z-axis, the collision surface 631A may be in contact with or collide with the collision surface 641A.

To reduce a probability of dust generation caused by the collision in a process of relative movement between the drive component 610 and the blade holder 620, collision surfaces of the protrusion 630 and the groove 640 may be coated with a dustproof material.

The dustproof material may be one or more of the following: an oil-based material, a lipid-based material, or a soft rubber-like material. The oil-based material may be mineral oil, synthetic oil, animal or vegetable oil, water-based liquid, or the like. The lipid-based material may be a soap-based lipid, a hydrocarbon-based lipid, an inorganic lipid, an organic lipid, or the like. The soft rubber-like material may be silicone, thermoplastic elastomer, thermoplastic polyurethane elastomer rubber chloride, rubber, or the like.

The dustproof material may include a material with good high-temperature resistance, low-temperature stability, oxidation resistance, hydrophobicity, electrical insulation, and the like.

In some examples, the dustproof material may include one or more of the following materials: a fluorine-containing organic compound, a silicon-containing organic compound, or a hydrocarbon organic compound. In other words, the dustproof material may include only any one of the fluorine-containing organic compound, the silicon-containing organic compound, or the hydrocarbon organic compound, or the dustproof material may include two or three types of organic compounds in the fluorine-containing organic compound, the silicon-containing organic compound, or the hydrocarbon organic compound.

When the dustproof material includes a plurality of types of organic compounds of the foregoing three types of organic compounds, component content of different types of organic compounds in the dustproof material is not limited in this application.

In some examples, a main composition of the dustproof material may include one or more of functional groups: -CF-, -CF₂-, or -CF₃.

For example, the composition of the dustproof material including the foregoing functional group may be one or more of the following: fluorocarbon, fluoroether, fluoroalcohol, fluoroketone, or fluorocarboxylic acid. For example, the dustproof material may include fluorinated oil and/or fluorinated resin.

In some scenarios, the fluorocarbon may also be referred to as a fluorinated carbon-based organic compound. For example, the fluorocarbon may be fluoroalkane, fluoroolefin, or fluoroalkyne, for example, carbon tetrafluoride, tetrafluoroethylene, or hexafluoropropylene.

In some scenarios, the fluoroether may also be referred to as a fluorinated ether-based organic compound. For example, the fluoroether may be perfluoroethyl ether, difluoroethyl ether, or trifluoroethyl ether.

For example, the fluoroalcohol may be trifluoromethanol, perfluoro ethanol, or perfluoro propanol. The fluoroketone may be perfluoroacetone, difluorohexanone, trifluoromethyl ketone, or the like. The fluorocarboxylic acid may be difluoroacetic acid, trifluoromethylpropionic acid, heptafluorodecic acid, or the like.

For example, in this application, functional groups and chemical bonds of a component of the dustproof material may be determined through a Fourier transform infrared spectroscopy (Fourier transform infrared spectroscopy, FTIR) test. An FTIR may be used to test an absorption characteristic of a to-be-tested sample for infrared light to analyze types of a chemical functional group and a chemical bond included in a compound molecule included in the to-be-tested sample. In an FTIR spectrum, a horizontal coordinate usually indicates a wave number (cm⁻¹), and indicates a frequency of infrared radiation. A vertical coordinate indicates a transmittance, an absorbance, a reflectivity, or the like, and reflects an absorption degree of the to-be-tested sample for infrared light of a specific wavelength.

For example, an FTIR test is performed on the dustproof material. If an absorption peak may be detected near a wave number of 1240 cm⁻¹, it may indicate that a functional group -CF-exists in the component of the dustproof material. If an absorption peak may be detected near a wave number of 1190 cm⁻¹, it may indicate that a functional group -CF₂- exists in the component of the dustproof material. If an absorption peak may be detected near a wave number of 1306 cm⁻¹, it may indicate that a functional group -CF₃ exists in the component of the dustproof material.

A test result of the FTIR may further indicate that the component of the dustproof material includes a carbon element and a fluorine element. Based on the test result of the FTIR, it may be determined that the component of the dustproof material may be a fluorinated carbon-based organic compound. For example, the component of the dustproof material may be polytetrafluoroethylene (C₂F₄)n.

It should be understood that the dustproof material in the foregoing composition may further include more functional groups or chemical bonds, for example, -C-C-. This is not limited in this application.

For example, an FTIR test is performed on the dustproof material. If an absorption peak may be detected near a wave number of 990 cm⁻¹, and the absorption peak is sharp and has high intensity, it may indicate that a functional group -C-O-C- exists in the component of the dustproof material. In addition, if an absorption peak may be detected near a wave number of 1240 cm⁻¹ in a test result of the FTIR, it may indicate that a functional group -CF- further exists in the component of the dustproof material. If an absorption peak may be detected near a wave number of 1190 cm⁻¹, it may indicate that a functional group -CF₂- further exists in the component of the dustproof material. If an absorption peak may be detected near a wave number of 1306 cm⁻¹, it may indicate that a functional group -CF₃ further exists in the component of the dustproof material.

The test result of the FTIR may further indicate that the component of the dustproof material includes a carbon element, a fluorine element, and an oxygen element. Based on the test result of the FTIR, it may be determined that the component of the dustproof material may be a fluorinated ether-based organic compound (fluoroether). For example, the component of the dustproof material may be perfluoropolyether (CF₃O[-CF(CF₃)CF₂O-]ₓ(-CF₂O-)yCF₃), perfluoroethyl ether, or difluoroethyl ether.

It should be understood that the dustproof material in the foregoing composition may further include more functional groups or chemical bonds, for example, -C-C-. This is not limited in this application.

In some examples, a main component of the dustproof material may include a functional group -Si-O-, and the main component of the dustproof material may further include one or more of the following functional groups: -CH₃, -CH₂-, or -CH-.

For example, a composition of the dustproof material including the foregoing functional group may be a silicon-containing organic compound. For example, the silicon-containing organic compound may be one or more of the following: silane, silanol, or organosiloxane.

For example, the silane may be methyl silane or dimethyl silane, and the silanol may be trimethyl silanol or triethoxy silanol.

For example, the organosiloxane may be dimethylsiloxane, polydimethylsiloxane (C₂H₆OSi)n, vinyl siloxane, or silicone resin.

Similarly, in this application, functional groups and chemical bonds of a component of the dustproof material may be determined through an FTIR test.

An FTIR test is performed on the dustproof material. If an absorption peak may be detected near a wave number of 1092 cm⁻¹, it may indicate that the component of the dustproof material includes a -Si-O- chemical bond. If an absorption peak may be detected in a wave number range of 3000 cm⁻¹ to 2840 cm⁻¹, it may indicate that the component of the dustproof material further includes one or more of the following functional groups: -CH₃, -CH₂-, or -CH-.

A test result of the FTIR may further indicate that the component of the dustproof material includes a carbon element, a silicon element, and an oxygen element. Based on the test result of the FTIR, it may be determined that the component of the dustproof material may include organosiloxane. For example, the component of the dustproof material may include polyorganosiloxane or silicone resin.

It should be understood that the dustproof material in the foregoing composition may further include more functional groups or chemical bonds, for example, -Si-C-. This is not limited in this application.

In some examples, a main component of the dustproof material may include only one or more of the functional groups: -CH₃, -CH₂-, or -CH-.

For example, the dustproof material may mainly include a hydrocarbon organic compound, and the hydrocarbon organic compound may be one or more of alkane, olefin, aromatic hydrocarbon, or the like.

For example, the alkane may include straight-chain alkane or cycloalkane, for example, straight-chain alkane or cycloalkane including 15 to 40 carbon atoms. The aromatic hydrocarbon may include low-molecular-weight polycyclic aromatic hydrocarbon or the like.

For example, the olefin may include polyalpha olefin (polyalpha olefin, PAO). Herein, the polyalpha olefin is an organic compound obtained through a polymerization reaction and the like of alpha olefin. The alpha olefin is a type of monoolefin that has one double bond located at a molecular chain end (that is, at a first carbon atom). Common alpha olefin includes ethylene, propylene, 1-butene, 1-hexene, and the like.

Similarly, in this application, functional groups and chemical bonds of a component of the dustproof material may be determined through an FTIR test.

An FTIR test is performed on the dustproof material. If absorption peaks are detected near wave numbers of 2960 cm⁻¹, 2870 cm⁻¹, and 1380 cm⁻¹, it may be determined that the component of the dustproof material may include a functional group -CH₃. If absorption peaks may be detected near wave numbers of 2930 cm⁻¹ and 2850 cm⁻¹, it may be determined that the component of the dustproof material may include a functional group -CH₂-. If an absorption peak may be detected near a wave number of 1460 cm⁻¹, it may be determined that the component of the dustproof material may include an alkyl. If an absorption peak is detected near a wave number of 722 cm⁻¹, it may be determined that the component of the dustproof material may include alkane with a plurality of carbon atoms.

A test result of the FTIR may further indicate that the component of the dustproof material includes a carbon element and a hydrogen element. Based on the test result of the FTIR, it may be determined that the component of the dustproof material may include one or more of the functional groups: -CH₃, -CH₂-, or -CH-. For example, the component of the dustproof material may include the polyalpha olefin.

In some examples, the dustproof material may include a plurality of types of organic compounds in the fluorine-containing organic compound, the silicon-containing organic compound, or the hydrocarbon organic compound, or in other words, the dustproof material may be a mixture including a plurality of types of organic compounds in the fluorine-containing organic compound, the silicon-containing organic compound, or the hydrocarbon organic compound. An FTIR test is performed on a plurality of different types of materials, and a detection result may reflect characteristic peaks of different functional groups in the different types of materials.

For example, the dustproof material may include one or more of the following: the fluorinated carbon-based organic compound, the fluorinated ether-based organic compound, the organosiloxane, or the polyalpha olefin.

For example, for an FTIR test on a dustproof material including the fluorinated carbon-based organic compound and the fluorinated ether-based organic compound, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and organopolysiloxane, characteristic peaks reflecting stretching vibration of the functional group -Si-O- and one or more of the functional groups: -CF-, -CF₂-, or -CF₃ may be detected.

For example, for an FTIR test on a dustproof material including the fluorinated ether-based organic compound and the organopolysiloxane, characteristic peaks reflecting stretching vibration of the functional group -C-O-C- and one or more of the functional groups: -CF-, -CF₂-, or -CF₃ may be detected.

For example, for an FTIR test on a dustproof material including the fluorinated carbon-based organic compound and the polyalpha olefin, characteristic peaks reflecting stretching vibration of one or more of the functional groups: -CF-, -CF₂-, or -CF₃ and one or more of the functional groups: -CH₃, -CH₂-, or -CH- may be detected.

For example, for an FTIR test on a dustproof material including the fluorinated ether-based organic compound and the polyalpha olefin, characteristic peaks reflecting stretching vibration of the functional group -C-O-C- and one or more of the functional groups: -CH₃, -CH₂-, or -CH- may be detected.

It should be noted that, performing component detection on the dustproof material through the FTIR is merely a test method for determining the component of the dustproof material, and should not be considered as a limitation on the component of the dustproof material. There are further a plurality of methods for determining the component of the dustproof material, for example, a nuclear magnetic resonance test and a Raman spectroscopy test. This is not limited in this application.

It should be further noted that the test result of the FTIR is affected by a plurality of factors such as an environment factor, a sample factor, and an operation method. Errors introduced by these factors may cause a deviation of the test result to some extent. In other words, a position of the characteristic peak reflected by the component of the dustproof material in the test result of the FTIR is merely an example for description. An actual position of the characteristic peak may have a deviation from a position of the characteristic peak provided in this application. The position of the characteristic peak in the foregoing example should not be considered as a limitation on this application. In some examples, the dustproof material may be a material in a liquid state at a normal temperature. The dustproof material in a liquid state is easy to be coated on the collision surface of the camera module, which helps simplify a processing and production process of the camera module. For example, an energy storage modulus E of the dustproof material at 25°C satisfies: E≤50 kPa. For example, E of the dustproof material at 25°C may be 40 kPa, 30 kPa, 20 kPa, or 10 kPa.

In an actual manufacturing and production process, the dustproof material in a liquid state may be sprayed at a plurality of points on different regions of the collision surface based on an area of the collision surface, and then the dustproof material with fluidity is made to flow and cover the collision surface through vibration.

In some examples, the dustproof material has specific adhesion, so that debris, dust, or the like in the camera module can be adhered to the dustproof material. For example, a viscosity η of the dustproof material at 25°C satisfies: η≥5000 mPa·s. For example, the viscosity η of the dustproof material at 25°C may be 10000 mPa·s, 15000 mPa·s, 20000 mPa·s, or 25000 mPa·s.

To improve stability of the dustproof material and improve image stabilization performance and imaging quality stability in a use process of the camera module, in some examples, the dustproof material may have a specific high-temperature resistance characteristic or specific heat resistance stability.

For example, a mass evaporation loss α of the dustproof material at 200°C for 24 hours satisfies: α≤0.25%. For example, α may be 0.20%, 0.15%, 0.10%, or 0.05%.

In some examples, the dustproof material may be applicable to a wide temperature range. For example, in a temperature range from -30°C to 120°C, the energy storage modulus E of the dustproof material can satisfy: E≤150 kPa, and the viscosity η satisfies: η≥5000 mPa·s.

The camera module having one or more of a variable aperture function, a lens element image stabilization function, a sensor image stabilization function, and an autofocus or focus adjustment function is used as an example to illustrate that a movable part in the camera module may collide with a fastening member based on a preset trajectory. In an actual use process, an unexpected collision may further occur between different mechanical parts in the camera module. For example, when the electronic device 10 falls or is squeezed, a mechanical part inside the camera module may also be deformed, causing friction, squeezing, collision, or the like.

In some examples, the camera module may include a first mechanical part and a second mechanical part, and relative movement may occur between the first mechanical part and the second mechanical part. For example, the first mechanical part and the second mechanical part may approach each other in a target direction, and a distance between a first plane on the first mechanical part and a second plane on the second mechanical part is the shortest in the target direction. When the first mechanical part collides with the second mechanical part in the target direction, the first plane of the first mechanical part first is in contact with or collides with the second plane of the second mechanical part.

In some examples, the first mechanical part may be a movable part or a fastening member, and the second mechanical part may be a movable part or a fastening member. This is not limited in this application.

The first plane of the first mechanical part and/or the second plane of the second mechanical part may be coated with the dustproof material described above. Related attributes of the dustproof material are described in detail above. For brevity, details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module, comprising a lens element, a movable part, a fastening member, and a photosensitive component configured to receive light passing through the lens element, wherein
the movable part comprises a first collision surface;
the fastening member comprises a second collision surface; and
the movable part is configured to be capable of approaching the fastening member in a target direction, wherein
the first collision surface and the second collision surface are two surfaces with a smallest spacing between the movable part and the fastening member in the target direction, the first collision surface and/or the second collision surface are/is coated with a dustproof material, and the dustproof material comprises one or more of the following: an oil-based material, a lipid-based material, or a soft rubber-like material.

2. The camera module according to claim 1, wherein an energy storage modulus E of the dustproof material at 25°C satisfies: E≤50 kPa.

3. The camera module according to claim 1 or 2, wherein a viscosity η of the dustproof material at 25°C satisfies: η≥5000 mPa·s.

4. The camera module according to any one of claims 1 to 3, wherein a mass evaporation loss α of the dustproof material at 200°C for 24 hours satisfies: α≤0.25%.

5. The camera module according to any one of claims 1 to 4, wherein the target direction is an axial direction of the lens element, and the first collision surface and the second collision surface are perpendicular to the axial direction of the lens element.

6. The camera module according to any one of claims 1 to 4, wherein the target direction is perpendicular to an axial direction of the lens element, and the first collision surface and the second collision surface are parallel to the axial direction of the lens element.

7. The camera module according to claim 5, wherein the movable part is sleeved on a periphery of the lens element, there are a plurality of first collision surfaces, and the plurality of first collision surfaces are located on two end faces that are of the movable part and that are disposed opposite to each other in the target direction.

8. The camera module according to claim 6, wherein the movable part is sleeved on a periphery of the lens element, the movable part comprises a main structure located in a middle region and a plurality of first stop structures, the main structure is configured to fasten the lens element, the plurality of first stop structures are distributed on two side surfaces that are of the main structure and that are disposed opposite to each other in the target direction, and the first collision surface is located on a surface that is of the first stop structure and that is close to the second collision surface.

9. The camera module according to claim 8, wherein the fastening member is sleeved on an outer side of the movable part, the fastening member comprises a second stop structure, and the second collision surface is located on a surface that is of the second stop structure and that is close to the first collision surface.

10. The camera module according to claim 9, wherein the camera module further comprises an accommodating member, the accommodating member is configured to accommodate the photosensitive component, and an end face of an end that is of the accommodating member and that is close to the lens element is coated with the dustproof material.

11. The camera module according to claim 6, wherein the movable part is sleeved on a periphery of the photosensitive component, the movable part comprises a main structure located in a middle region and a plurality of first stop structures, the main structure is configured to fasten the photosensitive component, the plurality of first stop structures are distributed on two side surfaces that are of the main structure and that are disposed opposite to each other in the target direction, and the first collision surface is located on a surface that is of the first stop structure and that is close to the second collision surface.

12. The camera module according to claim 11, wherein the fastening member is sleeved on an outer side of the movable part, the fastening member comprises a second stop structure, the second collision surface is located on a surface that is of the second stop structure and that is close to the first collision surface, and an end face of an end that is of the fastening member and that is close to the lens element is coated with the dustproof material.

13. The camera module according to claim 6, wherein the movable part is sleeved on peripheries of the lens element and the photosensitive component, and the fastening member is sleeved on a periphery of the movable part.

14. The camera module according to any one of claims 1 to 13, wherein the dustproof material comprises one or more of the following functional groups:
-CF₃, -CF₂-, -CF-, -C-O-C-, -CH₃, -CH₂-, -CH-, or -Si-O-.

15. The camera module according to claim 14, wherein the dustproof material comprises one or more of the following: a fluorinated carbon-based organic compound, a fluorinated ether-based organic compound, an organosiloxane, or a polyalpha olefin.

16. The camera module according to claim 15, wherein the fluorinated carbon-based organic compound comprises polytetrafluoroethylene, the fluorinated ether-based organic compound comprises a perfluoropolyether, and the organosiloxane comprises a polyorganosiloxane.

17. A variable aperture assembly, comprising: a blade, a blade holder, and a drive component, wherein the drive component is sleeved on a periphery of the blade holder, and the blade is disposed on an end face of an end that is of the blade holder and that is away from the drive component;
the blade holder comprises a third collision surface;
the drive component comprises a fourth collision surface; and
the drive component is configured to be rotatable around a target rotation axis to approach the blade holder, wherein
the third collision surface and the fourth collision surface are two surfaces that approach each other in a rotation process of the drive component, the third collision surface and/or the fourth collision surface are/is coated with a dustproof material, and the dustproof material comprises one or more of the following: an oil-based material, a lipid-based material, or a soft rubber-like material.

18. The variable aperture assembly according to claim 17, wherein an energy storage modulus E of the dustproof material at 25°C satisfies: E≤50 kPa.

19. The variable aperture assembly according to claim 17 or 18, wherein a viscosity η of the dustproof material at 25°C satisfies: η≥5000 mPa·s.

20. The variable aperture assembly according to any one of claims 17 to 19, wherein a mass evaporation loss α of the dustproof material at 200°C for 24 hours satisfies: α≤0.25%.

21. The variable aperture assembly according to any one of claims 17 to 20, wherein a groove is provided on an outer wall of the blade holder, a protrusion is disposed on an inner wall of the drive component, the protrusion extends into the groove, the third collision surface is located on the groove, and the fourth collision surface is located on the protrusion.

22. The variable aperture assembly according to any one of claims 17 to 21, wherein the dustproof material comprises one or more of the following functional groups:
-CF₃, -CF₂-, -CF-, -C-O-C, -CH₃, -CH₂-, -CH-, or -Si-O-.

23. The variable aperture assembly according to claim 22, wherein the dustproof material comprises one or more of the following: a fluorinated carbon-based organic compound, a fluorinated ether-based organic compound, an organosiloxane, or a polyalpha olefin.

24. The camera module according to claim 23, wherein the fluorinated carbon-based organic compound comprises polytetrafluoroethylene, the fluorinated ether-based organic compound comprises a perfluoropolyether, and the organosiloxane comprises a polyorganosiloxane.

25. A camera module, comprising a lens element, a photosensitive component, and the variable aperture assembly according to any one of claims 17 to 24, wherein the variable aperture assembly is located on a surface that is of the lens element and that is away from the photosensitive component.

26. An electronic device, comprising a middle frame and the camera module according to any one of claims 1 to 16 or claim 24, wherein the camera module is fastened to the middle frame.
